# EUROPÄISCHE PATENTSCHRIFT

(11) **EP 4 152 191 B1**
(45) Veröffentlichungstag und Bekanntmachung des Hinweises auf die Patenterteilung: **07.06.2023**
(21) Anmeldenummer: 21196828.4
(22) Anmeldetag: 15.09.2021
(51) Int. Cl.: H04L 67/564, G06F 21/55, G06F 21/62, H04L 67/12

(54) **VERFAHREN ZUR BEREITSTELLUNG EINER OBJEKTBEZOGENEN KOMMUNIKATION BEZOGEN AUF PHYSISCHE OBJEKTE**
METHOD FOR PROVIDING OBJECT-RELATED COMMUNICATION RELATED TO PHYSICAL OBJECTS
PROCÉDÉ DE FOURNITURE D'UNE COMMUNICATION ORIENTÉE OBJET ENTRE DES OBJETS PHYSIQUES

(43) Veröffentlichungstag der Anmeldung: 22.03.2023
(73) Patentinhaber: Connect One Digital AG, 60388 Frankfurt (DE)
(72) Erfinder: KEHREIN Carsten, 56070 Koblenz (DE); NIERAAD Thomas, 65719 Hofheim (DE)
(74) Vertreter: Best, Bastian

(56) Entgegenhaltungen:
- WO-A1-2020/010159
- US-A1- 2018 300 124
- US-A1- 2019 158 353

## Beschreibung

### TECHNISCHES GEBIET

Die vorliegende Erfindung betrifft allgemein das technische Gebiet der Informationstechnologie und insbesondere ein Verfahren zur Bereitstellung einer objektbezogenen Kommunikation, die bezogen auf ein physisches Objekt erfolgt. Ferner betrifft die vorliegende Erfindung eine loT-Plattform, eine digitale Repräsentation eines physischen Objekts und eine Kommunikationsvorrichtung, zur Durchführung des Verfahrens. Ferner betrifft die vorliegende Erfindung ein Computerprogramm zur Durchführung des Verfahrens.

### HINTERGRUND DER ERFINDUNG

Das Internet of Things (loT), zu Deutsch Internet der Dinge, ist ein Sammelbegriff für Technologien, die es ermöglichen, physische und digitale Objekte miteinander zu vernetzen und durch Informations- und Kommunikationstechniken zusammenwirken zu lassen. Ein im Stand der Technik realisierter Ansatz ist es dabei, digitale Repräsentationen für physische Objekte zu erstellen. Insbesondere im Bereich des Lean Manufacturing werden die Möglichkeiten, die ein Internet of Things bereitstellt, beispielsweise zur Optimierung von Materialflüssen, eingesetzt. Ein weiterer Bereich, in dem das Internet of Things in der Vergangenheit wachsende Bedeutung erhalten hat, ist der Bereich Smart Home. Dabei werden Geräte, beispielsweise gewöhnliche Haushaltsgeräte, mit einem digitalen Abbild auf einem Server versehen und lassen sich darüber beispielsweise überwachen oder steuern. US2018/300124 beschreibt beispielsweise software layers die sich physisch zwischen Sensoren und dem Netzwerk befinden.

Noch vergleichsweise unbedeutend ist das Konzept des Internet of Things im Bereich der Kommunikation, insbesondere der objektbezogenen Kommunikation. Es besteht somit ein Bedarf, die Vorzüge des Internet of Things auch für den Bereich der Kommunikation zu nutzen.

Es ist daher die Aufgabe der vorliegenden Erfindung, ein Verfahren bereitzustellen, das auf einfache Weise eine objektbezogene Kommunikation von Informationen ermöglicht. Dabei soll vorzugsweise das Erfordernis von Daten, die auf Personen schließen lassen, reduziert sein.

Ferner ist es die Aufgabe der vorliegenden Erfindung, eine loT-Plattform, eine digitale Repräsentation eines physischen Objekts und eine Kommunikationsvorrichtung bereitzustellen, die eine Durchführung des Verfahrens ermöglichen.

Ferner ist es die Aufgabe der vorliegenden Erfindung, ein Computerprogramm mit Befehlen bereitzustellen, die die Durchführung des Verfahrens ermöglichen.

### ZUSAMMENFASSUNG

Die vorstehenden Aufgabenstellungen werden insbesondere gelöst durch die Gegenstände der Ansprüche 1 13 und 14. Weitere Merkmale und Details der vorliegenden Erfindung ergeben sich aus den Unteransprüchen 2-12, der Beschreibung sowie den Zeichnungen.

Das erfindungsgemäße Verfahren zur Bereitstellung einer objektbezogenen Kommunikation, die bezogen auf ein physisches Objekt erfolgt, umfasst die Schritte:
- Erstellen einer digitalen Repräsentation für ein physisches Objekt auf einer loT-Plattform, wobei das physische Objekt mindestens einen Informationsträger aufweist,
   wobei der Informationsträger zumindest ein Identifikationskennzeichen umfasst, wobei das physische Objekt anhand des Identifikationskennzeichens eindeutig seiner digitalen Repräsentation zuordenbar ist, und
   wobei der Informationsträger mittels Kommunikationsvorrichtungen lesbar ist, um zumindest teilweise auf die jeweilige digitale Repräsentation zuzugreifen,
- Bereitstellen eines konfigurierbaren Informationscontainers für die digitale Repräsentation, wobei der Informationscontainer mindestens ein statisches Informationspaket und/oder mindestens ein dynamisches Informationspaket und/oder mindestens ein zugriffssensitives Informationspaket und/oder ein Gateway-Informationspaket enthalten kann,
   wobei jedes statische Informationspaket ausschließlich durch Kommunikationsvorrichtungen von Informationsemittenten bearbeitbar ist,
   wobei jedes dynamische Informationspaket durch Kommunikationsvorrichtungen bearbeitbar ist, die nicht ausschließlich Informationsemittenten sind,
   wobei jedes zugriffssensitive Informationspaket automatisch aufgrund eines Zugriffs durch eine Kommunikationsvorrichtung ergänzt wird, und
   wobei das Gateway-Informationspaket eine Kommunikation zwischen Kommunikationsvorrichtungen ermöglicht.

Besonders bevorzugt enthält der Informationscontainer mindestens zwei verschiedene aus den folgenden Arten von Informationspaketen: statisches Informationspaket, dynamisches Informationspaket, zugriffssensitives Informationspaket, Gateway-Informationspaket. Es kann ferner vorgesehen sein, dass der Informationscontainer mindestens drei verschiedene aus den folgenden Arten von Informationspaketen enthält: statisches Informationspaket, dynamisches Informationspaket, zugriffssensitives Informationspaket, Gateway-Informationspaket.

Physische Objekte im Sinne der vorliegenden Erfindung können insbesondere alltägliche Gegenstände oder auch öffentlich zugängliche Gegenstände sein. Beispielsweise kann ein physisches Objekt im Sinne der vorliegenden Erfindung ein Kaffeebecher, ein Bierglas, ein T-Shirt oder ein Buch sein. Aber auch ein öffentlicher Trinkbrunnen oder eine Sehenswürdigkeit kann ein physisches Objekt im Sinne der vorliegenden Erfindung sein. Für diese physischen Objekte werden digitale Repräsentation auf der loT-Plattform erstellt. Der loT-Plattform kann insbesondere als Server ausgebildet sein.

Beim Erstellen einer digitalen Repräsentation für ein physisches Objekt wird vereinfacht gesprochen ein Datenpaket auf der loT-Plattform erstellt, das eindeutig dem physischen Objekt zugeordnet ist und/oder mit diesem assoziiert ist. Das physische Objekt weist einen Informationsträger auf, wobei auf dem Informationsträger ein Identifikationskennzeichen, insbesondere ein Unique Identifier (UID) auslesbar abgelegt ist. Der Unique Identifier kann beispielsweise durch eine Leseeinrichtung einer Kommunikationsvorrichtung gelesen werden, wobei die Kommunikationsvorrichtung insbesondere als mobiles Endgerät ausgebildet sein kann. Der Unique Identifier (UID) gewährleistet somit eine eindeutige Zuordenbarkeit zwischen einem physischen Objekt und dessen digitale Repräsentation.

Insbesondere kann die Leseeinrichtung eine Kamera und/oder eine Nahfeldkommunikationsschnittstelle und/oder eine Nahbereichskommunikationsschnittstelle umfassen. Besonders bevorzugt ist die Leseeinrichtung als NFC-, RFID-, oder Bluetooth-Schnittstelle ausgebildet.

Der Unique Identifier kann beispielsweise durch die Kommunikationsvorrichtung in einen Persistent Identifier (PID) umgewandelt werden. Der Persistent Identifier kann besonders vorteilhaft den Unique Identifier umfassen, um eine eindeutige Zuordnung zu einer digitalen Repräsentation zu ermöglichen. Der Persistent Identifier kann insbesondere als Internet-Link ausgebildet sein, so dass die Kommunikationsvorrichtung, die als mobiles Endgerät ausgebildet sein kann, über das Internet auf die digitale Repräsentation zugreifen kann. Alternativ oder zusätzlich kann der Informationsträger mittels einer Kommunikationsvorrichtung gelesen werden, um auf dieselbe Weise auf die digitale Repräsentation zuzugreifen.

Um eine objektbezogene Kommunikation, auch zwischen verschiedenen Kommunikationsvorrichtungen, zu gewährleisten, wird bei einem Zugriff auf die digitale Repräsentation, diese adressiert, insbesondere mittels des oben beschriebenen Persistent Identifiers (PID), die den Unique Identifier (UID) enthält. Verschiedene Kommunikationsvorrichtungen, die eine Kommunikation miteinander durchführen sollen, adressieren sich somit insbesondere nicht direkt, sondern adressieren jeweils lediglich die digitale Repräsentation.

Ein Informationscontainer einer digitalen Repräsentation ist als Datenbehälter zu verstehen, in dem sich Informationspakete befinden und/oder in den Informationspakete hinzufügbar sind und/oder aus dem Informationspakete entfernbar sind. In diesem Sinne kann ein fertig konfigurierter Informationscontainer auch als ein Cluster von Informationspaketen angesehen werden.

Es stehen erfindungsgemäß verschiedene Arten von Informationspaketen zur Verfügung:
- statische Informationspakete,
- dynamische Informationspakete,
- zugriffssensitive Informationspakete und
- Gateway-Informationspakete.

Die verschiedenen Informationspakete haben voneinander verschiedene Funktionen, so dass das erfindungsgemäße Verfahren durch das Vorsehen der verschiedenartigen Informationspakete besonders vielseitig und flexibel einsetzbar ist. Dadurch kann das Verfahren unterschiedlichen Bedürfnissen und unterschiedlichen physischen Objekten in vorteilhafter Weise Rechnung tragen.

Um die verschiedenen Arten der Informationspakete voneinander abzugrenzen, sei folgende Konstellation vorangeschickt: Es existiert ein physisches Objekt mit einem Informationsträger und eine entsprechende digitale Repräsentation dieses physischen Objekts auf der IoT-Plattform. Ferner gibt es die Informationsemittenten IE1 und IE2 und die Nutzer N1, N2 und N3, die jeweils über eine Kommunikationsvorrichtung verfügen.

Ein Informationsemittent ist derjenige, der den Informationscontainer einer digitalen Repräsentation eines physischen Objekts konfiguriert, also - gegebenenfalls verschiedene - Informationspakete in dem Informationscontainer bereitstellt. Dies kann der Informationsemittent mit einer Kommunikationsvorrichtung tun, welches die erforderliche Berechtigung zur Konfiguration von Informationscontainern besitzt.

Ein Nutzer ist derjenige, der mit einer Kommunikationsvorrichtung auf die digitale Repräsentation zugreift, jedoch die Existenz von Informationspaketen im Informationscontainer nicht beeinflussen kann.

Ein statisches Informationspaket ist als ein Informationspaket zu verstehen, welches durch einen Informationsemittenten IE1 oder IE2 im Informationscontainer vorgesehen ist. Es enthält statische Informationen, also nicht durch Nutzer N1, N2 oder N3 veränderbare Informationen. Beispielsweise kann ein Nutzer N1 mit seiner Kommunikationsvorrichtung durch Lesen des Informationsträgers auf die digitale Repräsentation zugreifen und das statische Informationspaket öffnen, betrachten und/oder abrufen. Im einfachsten Fall handelt es sich dabei um eine Information über das physische Objekt, beispielsweise eine Bedienungsanleitung oder geschichtliche Hintergrundinformationen.

Ein dynamisches Informationspaket ist als Informationspaket zu verstehen, welches ebenfalls durch einen Informationsemittenten IE1 oder IE2 im Informationscontainer vorgesehen ist. Im Unterschied zu statischen Informationspaketen enthält es jedoch Informationen, die auch durch Nutzer N1, N2 oder N3 bearbeitet werden kann. Das Bearbeiten umfasst insbesondere das Verändern, Vervollständigen und/oder Löschen von vorhandenen Informationen. Beispielsweise kann ein Nutzer N1 mit seiner Kommunikationsvorrichtung durch Lesen des Informationsträgers auf die digitale Repräsentation zugreifen und das dynamische Informationspaket bearbeiten. Ein Nutzer N2 und/oder N3, der ebenfalls mit seiner Kommunikationsvorrichtung durch Lesen des Informationsträgers auf die digitale Repräsentation zugreift, kann die Bearbeitung sehen und gegebenenfalls eigene Bearbeitungen vornehmen. Dadurch, dass das dynamische Informationspaket auf der loT-Plattform liegt, sind Bearbeitungen vorteilhaft in Echtzeit möglich. Mit anderen Worten: Ein Nutzer N2 und/oder N3 kann die Bearbeitung des Nutzers N1 vorteilhaft sofort sehen.

Ein zugriffssensitives Informationspaket ist als Informationspaket mit einem integrierten Automatismus zu verstehen. Der Automatismus sorgt dafür, dass bei jedem Zugriff eine Ergänzung der Informationen im zugriffssensitiven Informationspaket erfolgt. Der Begriff "zugriffssensitiv" drückt somit aus, dass das Informationspaket quasi selbstständig auf einen Zugriff hin den Automatismus einer Ergänzung der Informationen vornimmt. Die Ergänzung der Informationen kann beispielsweise durch einen Zugriffszähler, der softwareseitig, beispielsweise als Web-Anwendung, durch die loT-Plattform zur Verfügung gestellt werden kann, implementiert sein, so dass die Anzahl der Zugriffe nachgehalten wird. Es können anhand der Zugriffsinformationen bestimmte Aktionen ausgelöst werden, die insbesondere vordefiniert sein können.

Ein Gateway-Informationspaket ist als eine Art Zwischenspeicher für Informationen zu verstehen. Verschiedene Kommunikationsvorrichtungen, beispielsweise von Nutzern N1, N2 und N3 können auf das Gateway-Informationspaket zugreifen und ohne eine direkte gegenseitige Adressierung miteinander kommunizieren. Adressiert wird dabei insbesondere nur die digitale Repräsentation der physischen Objekte, dessen Informationsträger gelesen wurde, oder genau gesagt das Gateway-Informationspaket. Die verschiedenen Nutzer N1, N2 und N3 können gleichzeitig oder zu verschiedenen Zeitpunkten auf das Gateway-Informationspaket zugreifen und Informationen, die einer der Nutzer N1, N2 oder N3 oder mehrere Nutzer dort hinterlegt hat bzw. haben. Es erfolgt somit eine Kommunikation zwischen verschiedenen Nutzern, wobei eine direkte Adressierung der Nutzer bzw. der Kommunikationsvorrichtungen der Nutzer entfällt.

Ein Beispiel für ein physisches Objekt mit einer digitalen Repräsentation, dessen Informationscontainer besonders vorteilhaft ein Gateway-Informationspaket enthalten kann, ist ein öffentlicher Trinkbrunnen. Dieser Trinkbrunnen kann beispielsweise im Rahmen eines Geocaching-Spiels mit einem Informationsträger ausgerüstet sein, so dass Teilnehmer des Geocaching-Spiels miteinander kommunizieren können. Da sich Teilnehmer eines Geocaching-Spiels in der Regel vorher nicht kennen, also untereinander fremd sind, ist es in der Regel unerwünscht, seine Identität untereinander sofort preiszugeben. Zugleich ist ein sozialer Austausch, also eine Kommunikation, gewünscht. Die Teilnehmer eines Geocaching-Spiels befinden sich jedoch oftmals nicht zur gleichen Zeit am gleichen Ort, so dass eine persönliche verbale Kommunikation nicht möglich ist. Durch die objektbezogene Kommunikation wird eine anonyme Kommunikation unter den Teilnehmern vorteilhaft ermöglicht. Findet das Geocaching-Spiel beispielsweise in einem Wald statt, können ausgewählte Bäume mit Informationsträgern ausgestattet werden.

In jedem Fall kann die Ausstattung mit einem Informationsträger insbesondere temporär sein, so dass der Informationsträger nach Bedarf auch wieder entfernt und/oder deaktiviert werden kann.

Der Kommunikation über die Informationspakete ist der Vorteil gemein, dass Daten, die auf Personen - insbesondere auf Nutzer - schließen lassen, nicht erforderlich sind. So kann eine dezentrale und anonyme Kommunikation über Objekte realisiert werden.

Vorzugsweise ist vorgesehen, dass das Verfahren ferner umfasst:
- Bereitstellen eines Kommunikationskanals zwischen einer Kommunikationsvorrichtung und der loT-Plattform, wenn die Kommunikationsvorrichtung den Informationsträger des physischen Objekts direkt oder indirekt liest, wobei die Kommunikationsvorrichtung vorzugsweise über eine Internetverbindung verfügt, über die sie auf die jeweilige digitale Repräsentation zugreift.

Um eine Kommunikation zwischen einer Kommunikationsvorrichtung und der loT-Plattform zu ermöglichen, wird ein Kommunikationskanal bereitgestellt, wenn die Kommunikationsvorrichtung durch Lesen des Informationsträgers das Identifikationskennzeichen liest. Das Lesen des Informationsträgers kann direkt, d. h. durch tatsächliches Lesen des Informationsträgers am physischen Objekt erfolgen, oder indirekt, d. h. durch Lesen eines Abbilds oder Duplikats des Informationsträgers, welches sich beispielsweise auf einem anderen mobilen Endgerät, das zuvor das physische Objekt gelesen hat, befindet. Dadurch wird in vorteilhafter Weise ermöglicht, dass auch ohne Vorhandensein des physischen Objekts ein Kommunikationskanal zwischen einer Kommunikationsvorrichtung und der loT-Plattform aufgebaut werden kann. Besonders vorteilhaft wird für die Kommunikation mit der loT-Plattform eine Internetverbindung der Kommunikationsvorrichtung verwendet, wobei für die Internetverbindung besonders bevorzugt ein mobiles Datennetz genutzt wird.

Ferner kann vorgesehen sein, dass die loT-Plattform, wenn der Kommunikationskanal bereitgestellt ist, Informationspakete über den Kommunikationskanal sendet und Anfragen und/oder Informationen über den Kommunikationskanal empfängt.

Sofern ein Kommunikationskanal bereitgestellt ist, können Informationspakete zwischen einer Kommunikationsvorrichtung und der loT-Plattform kommuniziert werden. Dabei können Anfragen und/oder Informationen über den Kommunikationskanal ausgetauscht werden. Anfragen können beispielsweise Zugriffsanfragen sein, die bewirken, dass die loT-Plattform der Kommunikationsvorrichtung ermöglicht, die in einem Informationscontainer der digitalen Repräsentation des physischen Objekts hinterlegten Informationen anzuzeigen. Ferner können Informationen über den Kommunikationskanal von der Kommunikationsvorrichtung an die loT-Plattform gesendet werden, die wiederum diese Informationen empfängt. Dadurch wird eine besonders effiziente Kommunikation zwischen einer Kommunikationsvorrichtung und der loT-Plattform ermöglicht.

Besonders bevorzugt ist vorgesehen, dass mehrere Kommunikationskanäle zu verschiedenen Kommunikationsvorrichtungen bereitgestellt werden, wenn die verschiedenen Kommunikationsvorrichtungen den Informationsträger des physischen Objekts direkt oder indirekt lesen.

Die loT-Plattform kann, wenn verschiedene Kommunikationsvorrichtungen einen Informationsträger eines physischen Objekts direkt oder indirekt lesen, mehrere Kommunikationskanäle zu jeweils jeder Kommunikationsvorrichtung bereitstellen. Dadurch kann zeitgleich auf ein Informationspaket im Informationscontainer der digitalen Repräsentation des physischen Objekts zugegriffen werden. Besonders vorteilhaft erfolgt der Zugriff in Echtzeit. Ferner kann durch die mehreren Kommunikationskanäle zwischen der loT-Plattform und den verschiedenen Kommunikationsvorrichtungen eine objektbezogene Kommunikation zwischen den verschiedenen Kommunikationsvorrichtungen ermöglicht werden. Dabei ist es nicht erforderlich, dass sich Kommunikationsvorrichtungen untereinander direkt adressieren. Die gesamte Kommunikation findet über die loT-Plattform statt, d. h. die loT-Plattform wird adressiert, während die Kommunikationsvorrichtungen - und damit die Nutzer der Kommunikationsvorrichtungen - anonym bleiben.

Vorzugsweise ist vorgesehen, dass wenn der Informationscontainer ein Gateway-Informationspaket umfasst, dieser als Zwischenspeicher für Informationen agiert, die von Kommunikationsvorrichtungen an die digitale Repräsentation kommuniziert werden, um durch Weiterleiten dieser Informationen an andere Kommunikationsvorrichtungen eine Kommunikation zwischen verschiedenen Kommunikationsvorrichtungen zu ermöglichen, wobei dies vorzugsweise durch eine Kombination mehrerer Kommunikationskanäle erfolgt.

Durch ein als Zwischenspeicher für Informationen agierendes Gateway-Informationspaket wird eine besonders effiziente Kommunikation zwischen Kommunikationsvorrichtungen ermöglicht. Dabei werden verschiedene Kommunikationskanäle zwischen der loT-Plattform und den verschiedenen kommunizierenden Kommunikationsvorrichtungen genutzt. Die Kommunikation kann in Echtzeit oder zeitversetzt erfolgen.

Das Gateway-Informationspaket agiert als Zwischenspeicher, in dem von einer Kommunikationsvorrichtung kommunizierte Informationen bereitgehalten werden, um diese einer zeitgleich oder zu einem späteren Zeitpunkt auf das Gateway-Informationspaket zugreifenden Kommunikationsvorrichtung zur Verfügung zu stellen. Besonders bevorzugt können auch mehrere Kommunikationsvorrichtungen in Echtzeit Informationen zur Verfügung stellen und somit miteinander kommunizieren. Durch die Kommunikation von verschiedenen Kommunikationsvorrichtungen über das Gateway-Informationspaket kann besonders vorteilhaft eine Anonymität der Nutzer der Kommunikationsvorrichtungen gewährleistet werden.

Es kann vorteilhaft vorgesehen sein, dass wenn der Informationscontainer mindestens ein zugriffssensitives Informationspaket umfasst, das zugriffssensitive Informationspaket mit jedem Zugriff durch eine Kommunikationsvorrichtung mit einer zusätzlichen Information über den erfolgten Zugriff ergänzt wird, wobei das Ergänzen vorzugsweise den Zeitpunkt des Zugriffs und/oder die Art der Kommunikationsvorrichtung, die auf das Informationspaket zugegriffen hat, umfasst.

Durch das Vorsehen eines zugriffsensitiven Informationspakets wird auf besonders einfache Weise ermöglicht, beispielsweise die Anzahl der Zugriffe auf das Informationspaket nachzuhalten. Ferner kann der Zeitpunkt des Zugriffs und/oder die Art der Kommunikationsvorrichtung, die auf das Informationspaket zugegriffen hat, nachgehalten werden. Durch das Nachhalten des Zeitpunktes des Zugriffs kann beispielsweise die Netzwerkbelastung zeitpunktabhängig optimiert werden. So kann beispielsweise mittels maschinellen Lernens herausgefunden werden, zu welchen Zeitpunkten oder Tageszeiten besonders viele Zugriffe erfolgen, um zukünftig für diese Zeitpunkte und Tageszeiten Optimierungen der loT-Plattform vorzunehmen, um eine besonders hohe Netzwerklast zu bewerkstelligen.

Informationen über die Art der Kommunikationsvorrichtung, die auf das Informationspaket zugegriffen hat, kann beispielsweise verwendet werden, um mögliche Fehlfunktionen der loT-Plattform beispielsweise beim Aufbau von Kommunikationskanälen mit bestimmten Kommunikationsvorrichtungen zu erkennen und diese Fehler zu beheben. Beispielsweise können Kommunikationsvorrichtungen bestimmter Hersteller, die beispielsweise ein bestimmtes Betriebssystem verwenden, eine Optimierung der loT-Plattform erfordern, um eine reibungslose Kommunikation zu gewährleisten.

Die Information über die Anzahl der Zugriffe kann insbesondere dafür verwendet werden, bestimmte Aktionen auszulösen. Beispielsweise kann ein Informationsemittent, der ein zugriffssensitives Informationspaket in den Informationscontainer der digitalen Repräsentation des physischen Objekts vorgesehen hat, nach einer vordefinierten Anzahl von Zugriffen benachrichtigt werden oder aufgefordert werden, eine bestimmte Aktion zu unternehmen. Auch kann beispielsweise vorgesehen sein, dass nach einer bestimmten Anzahl von Zugriffen, keine weiteren Zugriffe mehr auf die digitale Repräsentation oder auf das zugriffssensitiven Informationspaket oder auf bestimmte Informationspakete im Informationscontainer der digitalen Repräsentation zugelassen werden. Das erfindungsgemäße Verfahren wird somit besonders vielseitig und flexibel einsetzbar.

Das erfindungsgemäße Verfahren kann ferner umfassen:
- Kommunizieren einer Übersicht aller im Informationscontainer vorliegenden Informationspakete an eine Kommunikationsvorrichtung, wenn diese den Informationsträger des physischen Objekts direkt oder indirekt liest und auf die digitale Repräsentation zugreift, wobei vorzugsweise Übersicht der Informationspakete durch eine Anzeigevorrichtung der Kommunikationsvorrichtung angezeigt wird und bestimmte Informationspakete über eine Eingabe in die Kommunikationsvorrichtung wählbar sind, die durch die Kommunikationsvorrichtung von der loT-Plattform abgerufen werden sollen.

Ein Informationscontainer einer digitalen Repräsentation eines physischen Objekts weist gegebenenfalls mehrere Informationspakete auf. Wird durch eine Kommunikationsvorrichtung durch Lesen des Informationsträgers des zugehörigen physischen Objekts auf die digitale Repräsentation bzw. auf den Informationscontainer zugegriffen, ist es regelmäßig gewünscht, eine Übersicht aller verfügbaren Informationspakete zu erhalten. Die loT-Plattform stellt eine solche Übersicht der zur Verfügung stehenden Informationspakete, die im Informationscontainer vorhanden sind, bereit. Eine Anzeigevorrichtung der Kommunikationsvorrichtung kann besonders vorteilhaft und auf einfache Weise diese Übersicht anzeigen. Eine Eingabe des Nutzers der Kommunikationsvorrichtung kann beispielsweise zu einer Auswahl bestimmter Informationspakete führen, die durch die Kommunikationsvorrichtung von der loT-Plattform abgerufen werden sollen. Die ausgewählten Informationspakete können bei Bedarf lokal auf der Kommunikationsvorrichtung gespeichert werden.

Das erfindungsgemäße Verfahren umfasst vorzugsweise:
- Konfigurieren des Informationscontainers der digitalen Repräsentation, wobei das Konfigurieren des Informationscontainers vorzugsweise durch eine Kommunikationsvorrichtung eines Informationsemittenten erfolgt, der vorzugsweise weder Besitzer noch Emittent des physischen Objekts ist, umfassend:
   i) Hinzufügen mindestens eines Informationspakets zum Informationscontainer der digitalen Repräsentation, und/oder
   ii) Entfernen mindestens eines Informationspakets aus dem Informationscontainer der digitalen Repräsentation.

Ein konfigurierbar ausgebildeter Informationscontainer ist besonders vorteilhaft hinsichtlich der Variabilität und Flexibilität. So können bei Bedarf oder in Abhängigkeit von äußeren Umständen Informationspakete hinzugefügt oder entfernt werden. Die Konfiguration kann insbesondere unabhängig von einem Inverkehrbringen der physischen Objekte erfolgen.

Wie vorstehend beschrieben, kann das Konfigurieren des Informationscontainers entweder durch ein Hinzufügen von Informationspaketen oder durch ein Entfernen von Informationspaketen erfolgen. Beim Hinzufügen von Informationspaketen können in vorteilhafter Weise gewünschte Informationspakete hinzugefügt werden. Beim Entfernen von Informationspaketen können vorab eine Vielzahl von Informationspaketen hinterlegt sein, wobei beim Konfigurieren des Informationscontainers gezielt ungewünschte Informationspakete entfernt werden können. Somit wird eine besonders einfache Möglichkeit geschaffen, bestimmte Informationspakete in einen Informationscontainer einer mit einem physischen Objekt assoziierten digitalen Repräsentation zu hinterlegen.

Ferner kann das Verfahren umfassen:
- Bereitstellen eines Informationspaketepools, der zur Verfügung stehende Informationspakete umfasst, wobei ein Erstellen neuer zur Verfügung stehender Informationspakete des Informationspaketepools durch einen Informationsemittenten erfolgen kann, der vorzugsweise weder Besitzer noch Emittent des physischen Objekts ist.

Durch das Bereitstellen eines Informationspaketepools mit zur Verfügung stehenden Informationspaketen kann die Konfiguration des Informationscontainers auf besonders einfache Weise erfolgen. Der Informationspaketepool kann insbesondere durch eine IoT-Plattform vorgehalten werden. In den Informationspaketepool können verschiedene vordefinierte Informationspakete hinterlegt sein, die als Vorlage für die Konfiguration der Informationscontainer dienen können. Das Erstellen neuer zur Verfügung stehender Informationspakete im Informationspaketepool kann insbesondere durch einen Informationsemittenten erfolgen. Dieser ist vorzugsweise ein Dritter, der weder Besitzer noch Emittent des physischen Objekts ist.

Somit kann in vorteilhafter Weise ein Informationspaketepool geschaffen und/oder verändert werden, der der Kreativität von Dritten Raum lässt und es ermöglicht, ein breites Spektrum von zur Verfügung stehenden Informationspaketen zu erstellen. Durch das Auseinanderfallen von Emittenten der physischen Objekte, der Besitzer von physischen Objekten, von Informationsempfängern bzw. Nutzern und von Informationsemittenten können verschiedene Akteure in vorteilhafter Weise miteinander kollaborieren.

Es kann ferner vorgesehen sein, dass das Konfigurieren des Informationscontainers der digitalen Repräsentationen zumindest teilweise automatisch erfolgt, indem vorzugsweise die für die digitale Repräsentation zur Verfügung stehenden Informationspakete anhand eines bestimmten Merkmals der digitalen Repräsentation mittels maschinellen Lernens automatisch vorselektiert werden.

Durch das Vorsehen einer zumindest teilweise automatisch erfolgenden Konfiguration des Informationscontainers wird die Konfiguration in vorteilhafter Weise vereinfacht. So können beispielsweise abhängig von dem physischen Objekt bzw. abhängig von der digitalen Repräsentation bzw. abhängig von einem hinterlegten Merkmal in der digitalen Repräsentation, bestimmte Informationspakete vorselektiert werden, die sich an dem physischen Objekt orientieren. Die zumindest teilweise automatisch erfolgende Konfiguration kann insbesondere das Ausgeben einer nach Relevanz geordneten Liste von Informationspaketen umfassen, wobei die Liste der Informationspakete nach absteigender Relevanz sortiert ist. Eine hohe Relevanz haben dabei Informationspakete, deren Informationen und/oder Funktionen - abhängig von der Art des Informationspakets - besonders gut zu dem jeweiligen physischen Objekt passen.

Die Beurteilung der Relevanz bzw. ob ein Informationspaket zu einem jeweiligen physischen Objekt passt, kann in vorteilhafter Weise durch maschinelles Lernen unterstützt werden. Dabei können Eingaben eines Informationsemittenten, der bestimmte Informationspakete einem Informationscontainer einer digitalen Repräsentation hinzufügt, als Trainingsdaten herangezogen und ausgewertet werden, um Kriterien für die Beurteilung der Relevanz und für die zumindest teilweise automatisch erfolgende Konfiguration abzuleiten (supervised machine learning).

Vorzugsweise ist vorgesehen, dass beim Erstellen der digitalen Repräsentation eine zunächst nicht zugeordnete digitale Repräsentation erstellt wird, wobei dies unabhängig von der Existenz des physischen Objekts erfolgt, wobei nachträglich ein Verknüpfen mit dem physischen Objekt mittels des Identifikationskennzeichens erfolgen kann.

Durch die Unabhängigkeit der Existenz der digitalen Repräsentation und der Existenz des physischen Objekts wird in vorteilhafter Weise die Flexibilität und Variabilität des erfindungsgemäßen Verfahrens erhöht. So kann es beispielsweise sein, dass ein physisches Objekt lange bevor eine digitale Repräsentation erstellt wird, hergestellt wird bzw. existiert. Es können somit digitale Repräsentationen auch nachträglich für bereits hergestellte oder langjährig benutzte physische Objekte erstellt werden. Umgekehrt können anhand einer geplanten Produktion von physischen Objekten vorab digitale Repräsentationen erstellt werden, die erst nachträglich mit den physischen Objekten verknüpft werden. Insbesondere wird dadurch in vorteilhafter Weise ermöglicht, dass der Hersteller und/oder Emittent der physischen Objekte und der Ersteller der digitalen Repräsentationen verschiedene Akteure sein können.

Das Verfahren kann ferner umfassen:
- Emittieren des physischen Objekts mit dem Informationsträger, wobei die Herstellung des physischen Objekts, die Herstellung des Informationsträgers und die Hinzufügung des Informationsträgers zu dem physischen Objekt unabhängig voneinander, vorzugsweise durch mindestens zwei voneinander verschiedene Akteure, erfolgt.

Eine weitere Erhöhung der Flexibilität und Variabilität des Verfahrens wird dadurch erreicht, dass der Hersteller und/oder Emittent des physischen Objektes und der Hersteller des Informationsträgers voneinander verschiedene Akteure sein können. Ferner kann der Akteur, der den Informationsträger zu dem physischen Objekt hinzufügt, ein anderer Akteur sein. Beispielsweise kann ein Auftragsfertiger A ein physisches Objekt herstellen, ein Auftragsfertiger B einen Informationsträger herstellen, während ein drittes Unternehmen C, welches beispielsweise der Auftraggeber der Auftragsfertiger A und B sein kann, den Informationsträger zu dem physischen Objekt hinzufügt.

Das Hinzufügen des Informationsträgers zu dem physischen Objekt kann insbesondere durch gängige Befestigungsmechanismen, abhängig von der Beschaffenheit und dem Material des physischen Objekts und/oder des Informationsträgers, erfolgen. Denkbar wäre beispielsweise ein Aufkleben des Informationsträgers auf das physische Objekt. Ferner ist ein Drucken, Laminieren oder Vernähen des Informationsträgers möglich. Alternativ oder zusätzlich kann der Informationsträger separat als Beigabe zu einem physischen Objekt emittiert werden.

Vorzugsweise umfasst das Verfahren ferner:
- Freigeben der digitalen Repräsentation zur Konfiguration des Informationscontainers, wobei das Freigeben zwingende Voraussetzung für die Konfiguration des Informationscontainers der digitalen Repräsentation ist, wobei vorzugsweise das Freigeben umfasst:
   a) Erteilung der Erlaubnis zur Konfiguration, vorzugsweise an bestimmte Akteure, und/oder
   b) Festlegung von Regeln für die Konfiguration, wobei die Regeln eine oder mehrere der folgenden Regelarten umfassen können:
      b1) der jeweilige Informationscontainer darf ausschließlich statische Informationspakete enthalten;
      b2) der jeweilige Informationscontainer darf ausschließlich dynamisch Informationspakete enthalten;
      b3) der jeweilige Informationscontainer darf ausschließlich zugriffssensitive Informationspakete enthalten;
      b4) der jeweilige Informationscontainer darf ausschließlich Gateway-Informationspakete enthalten;
      b5) der jeweilige Informationscontainer muss zumindest ein statisches und zumindest ein dynamisches Informationspaket enthalten;
      b6) der jeweilige Informationscontainer muss zumindest ein statisches und zumindest ein zugriffssensitives Informationspaket enthalten;
      b7) der jeweilige Informationscontainer muss zumindest ein statisches Informationspaket und ein Gateway-Informationspaket enthalten;
      b8) der jeweilige Informationscontainer muss zumindest ein dynamisches und zumindest ein zugriffssensitives Informationspaket enthalten;
      b9) der jeweilige Informationscontainer muss zumindest ein dynamisches Informationspaket und ein Gateway-Informationspaket enthalten;
      b10) der jeweilige Informationscontainer muss zumindest ein zugriffssensitives Informationspaket und ein Gateway-Informationspaket enthalten;
      b11) der jeweilige Informationscontainer muss zumindest ein statisches und zumindest ein dynamisches und zumindest ein zugriffssensitives Informationspaket enthalten;
      b12) der jeweilige Informationscontainer muss zumindest ein statisches Informationspaket und zumindest ein dynamisches Informationspaket und ein Gateway-Informationspaket enthalten;
      b13) der jeweilige Informationscontainer muss zumindest ein statisches Informationspaket und zumindest ein zugriffssensitives Informationspaket und ein Gateway-Informationspaket enthalten;
      b14) der jeweilige Informationscontainer muss zumindest ein dynamisches Informationspaket und zumindest ein zugriffssensitives Informationspaket und ein Gateway-Informationspaket enthalten;
      b15) der jeweilige Informationscontainer darf ausschließlich bestimmte Informationspakete aus einem Informationspaketepool enthalten;
      b16) es gibt eine Höchstgrenze für die Anzahl der Informationspakete im jeweiligen Informationscontainer;
      b17) es gibt eine Mindestgrenze für die Anzahl der Informationspakete im jeweiligen Informationscontainer;
      b18) die Hinzufügung oder das Entfernen von Informationspaketen kann nur innerhalb bestimmter Zeitspannen und/oder zu bestimmten Tageszeiten erfolgen;
      b19) die Hinzufügung oder das Entfernen von Informationspaketen kann nur erfolgen, wenn eine bestimmte weitere Bedingung neben der Freigabe der digitalen Repräsentation erfüllt ist.

Durch das Vorsehen eines zwingend erforderlichen Freigabeschritts der digitalen Repräsentation zur Konfiguration des Informationscontainers kann gewährleistet werden, dass der Informationscontainer keine unerwünschten Informationspakete enthält oder überhaupt Informationspakete hinzugefügt werden, obwohl dies noch unerwünscht ist bzw. noch nicht zugelassen werden soll. Beispielsweise kann ein Emittent von physischen Objekten als derjenige vorgesehen sein, der entscheidet, wann und/oder ob der Informationscontainer der digitalen Repräsentation, welcher dem jeweiligen physischen Objekt zugeordnet ist, mit Informationspaketen oder mit bestimmten Informationspaketen versehen werden darf. Dadurch wird in vorteilhafter Weise die Sicherheit erhöht und es werden unerwünschte Funktionalitäten vermieden. Bestimmten Akteuren kann auf diese Weise die Administration eines Informationscontainers ermöglicht werden.

Besondere Regeln können ferner dazu beitragen, die Sicherheit und die gewünschte Funktionalität weiter zu verbessern. So können beispielsweise zum Zwecke des Jugendschutzes nur bestimmte Informationspakete und/oder eine bestimmte Art von Informationspaketen dem Informationscontainer hinzufügbar sein oder aus diesem entfernbar sein. Über die Regeln kann wiederum, wie oben beschrieben, ein bestimmter Akteur, beispielsweise der Emittent der physischen Objekte, entscheiden. Besonders vorteilhaft kann vorgesehen sein, dass Regeln für die Konfiguration frei definierbar bzw. hinzufügbar sind, insbesondere den digitalen Repräsentationen hinzufügbar sind. Ein Beispiel für eine solche Regel ist es, die Festlegung einer Höchstgrenze für die Anzahl der hinzufügbaren Informationspakete vorzusehen. So kann in vorteilhafter Weise vermieden werden, dass die Anzahl der verfügbaren Informationspakete in einem Informationscontainer aufgrund ihrer Anzahl unübersichtlich wird. Ferner kann beispielsweise eine Regel vorgesehen werden, wonach das Hinzufügen oder Entfernen von Informationspaketen nur erfolgen kann, wenn eine oder mehrere bestimmte weitere Bedingungen neben der Freigabe der digitalen Repräsentation erfüllt ist bzw. erfüllt sind. Eine solche weitere Bedingung kann beispielsweise ein registrierter Zugriff durch eine Kommunikationsvorrichtung sein.

Erfindungsgemäß ist eine loT-Plattform, oder digitale Repräsentation eines physischen Objekts, oder eine Kommunikationsvorrichtung vorgesehen, vorgesehen und konfiguriert, um die jeweiligen Schritte des erfindungsgemäßen Verfahrens durchzuführen.

Erfindungsgemäß ist ferner ein Computerprogramm vorgesehen, umfassend Befehle, die bei der Ausführung des Programms durch einen Computer diesen veranlassen, das erfindungsgemäße Verfahren auszuführen.

Die in Bezug auf das erfindungsgemäße Verfahren beschriebenen technischen Vorteile und Ausgestaltungen gelten gleichermaßen für die erfindungsgemäße loT-Plattform, die digitale Repräsentation, die Kommunikationsvorrichtung und für das erfindungsgemäße Computerprogramm.

### KURZE BESCHREIBUNG DER ZEICHNUNGEN

Bevorzugte Ausführungsformen der vorliegenden Offenbarung werden nachfolgend mit Bezugnahme auf die folgenden Figuren beschrieben:
- Fig. 1:: Zeigt eine erste schematische Darstellung von Ausführungsformen der vorliegenden Erfindung.
- Fig. 2:: Zeigt eine zweite schematische Darstellung von Ausführungsformen der vorliegenden Erfindung.
- Fig. 3:: Zeigt eine dritte schematische Darstellung von Ausführungsformen der vorliegenden Erfindung.
- Fig. 4:: Zeigt eine vierte schematische Darstellung von Ausführungsformen der vorliegenden Erfindung.
- Fig. 5:: Zeigt schematisch ein Einlesen einer Berechtigung durch eine Kommunikationsvorrichtung gemäß Ausführungsformen der vorliegenden Erfindung.
- Fig. 6:: Zeigt eine schematische Darstellung eines Informationscontainers von Ausführungsformen der vorliegenden Erfindung.

### BESCHREIBUNG BEVORZUGTER AUSFÜHRUNGSBEISPIELE

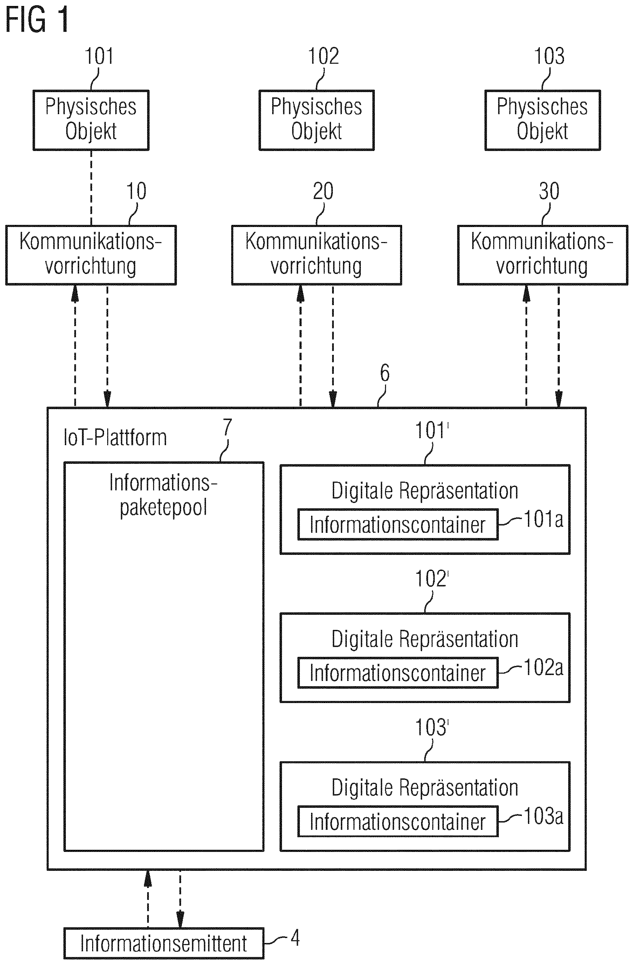

Gemäß der in den Figuren 1, 2, 3 und 4 dargestellten Ausführungsformen der vorliegenden Erfindung ist eine loT-Plattform 6 vorgesehen, die einen Informationspaketepool 7 und digitale Repräsentationen 101', 102', 103' umfasst. Die digitalen Repräsentationen 101', 102', 103' sind jeweils eindeutige Repräsentationen jeweiliger physischer Objekte 101, 102, 103. Die physischen Objekte 101, 102, 103 umfassen einen Informationsträger I mit einem darauf hinterlegten einmaligen Identifikationskennzeichen UID, mit dem ein jeweiliges physisches Objekt 101, 102, 103 eindeutig seiner digitalen Repräsentation 101', 102', 103' zuordenbar ist. Die jeweilige digitale Repräsentation 101', 102', 103' eines physischen Objekts 101, 102, 103 kann umgekehrt mittels eines entsprechend auch in der digitalen Repräsentation 101', 102', 103` hinterlegten Identifikationskennzeichens UID eindeutig dem jeweiligen physischen Objekt 101, 102, 103 zugeordnet werden. Beispielsweise ist die digitale Repräsentation 101' die Repräsentation des physischen Objekts 101 und digitale Repräsentation 102` die Repräsentation des physischen Objekts 102 und digitale Repräsentation 103' die Repräsentation des physischen Objekts 103.

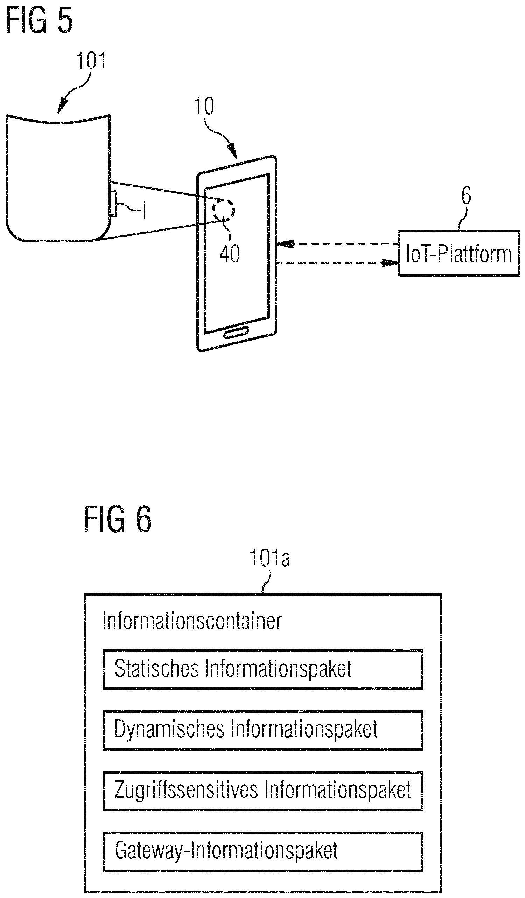

Die loT-Plattform 6 stellt einen Informationspaketepool 7 bereit. Der Informationspaketepool 7 umfasst vorkonfigurierte Informationspakete. Diese können, wie in Figur 6 dargestellt, statische Informationspakete, dynamische Informationspakete, zugriffssensitive Informationspakete oder Gateway-Informationspakete sein.

Die verschiedenen Informationspakete haben voneinander verschiedene Funktionen, so dass das erfindungsgemäße Verfahren durch das Vorsehen der verschiedenartigen Informationspakete besonders vielseitig und flexibel einsetzbar ist. Dadurch kann das Verfahren unterschiedlichen Bedürfnissen und unterschiedlichen physischen Objekten 101, 102, 103 in vorteilhafter Weise Rechnung tragen.

Um die verschiedenen Arten der Informationspakete voneinander abzugrenzen, sei folgende Konstellation vorangeschickt: Es existiert ein physisches Objekt 101 mit einem Informationsträger I und eine entsprechende digitale Repräsentation 101` dieses physischen Objekts 101 auf der loT-Plattform 6. Ferner gibt es die Informationsemittenten IE1 und IE2 und die Nutzer N1, N2 und N3, die jeweils über eine Kommunikationsvorrichtung 10, 20, 30 verfügen.

Ein Informationsemittent 4 ist derjenige, der den Informationscontainer 101a einer digitalen Repräsentation 101 eines physischen Objekts 101 konfiguriert, also - gegebenenfalls verschiedene - Informationspakete in dem Informationscontainer 101a bereitstellt. Dies kann der Informationsemittent 4 mit einer Kommunikationsvorrichtung 10, 20, 30 tun, welches die erforderliche Berechtigung zur Konfiguration von Informationscontainern 101a besitzt.

Ein Nutzer ist derjenige, der mit einer Kommunikationsvorrichtung 10, 20, 30 auf die digitale Repräsentation 101 zugreift, jedoch die Existenz von Informationspaketen im Informationscontainer 101a nicht beeinflussen kann.

Ein statisches Informationspaket ist als ein Informationspaket zu verstehen, welches durch einen Informationsemittenten IE1 oder IE2 im Informationscontainer 101a vorgesehen ist. Es enthält statische Informationen, also nicht durch Nutzer N1, N2 oder N3 veränderbare Informationen. Beispielsweise kann ein Nutzer N1 mit seiner Kommunikationsvorrichtung 10 durch Lesen des Informationsträgers I auf die digitale Repräsentation 101` zugreifen und das statische Informationspaket öffnen, betrachten und/oder abrufen. Im einfachsten Fall handelt es sich dabei um eine Information über das physische Objekt 101, beispielsweise eine Bedienungsanleitung oder geschichtliche Hintergrundinformationen.

Ein dynamisches Informationspaket ist als Informationspaket zu verstehen, welches ebenfalls durch einen Informationsemittenten IE1 oder IE2 im Informationscontainer 101a vorgesehen ist. Im Unterschied zu statischen Informationspaketen enthält es jedoch Informationen, die auch durch Nutzer N1, N2 oder N3 bearbeitet werden kann. Das Bearbeiten umfasst insbesondere das Verändern, Vervollständigen und/oder Löschen von vorhandenen Informationen. Beispielsweise kann ein Nutzer N1 mit seiner Kommunikationsvorrichtung 10 durch Lesen des Informationsträgers I auf die digitale Repräsentation 101` zugreifen und das dynamische Informationspaket bearbeiten. Ein Nutzer N2 und/oder N3, der ebenfalls mit seiner Kommunikationsvorrichtung 20, 30 durch Lesen des Informationsträgers I auf die digitale Repräsentation zugreift, kann die Bearbeitung sehen und gegebenenfalls eigene Bearbeitungen vornehmen. Dadurch, dass das dynamische Informationspaket auf der loT-Plattform liegt, sind Bearbeitungen vorteilhaft in Echtzeit möglich. Mit anderen Worten: Ein Nutzer N2 und/oder N3 kann die Bearbeitung des Nutzers N1 vorteilhaft sofort sehen.

Ein zugriffssensitives Informationspaket ist als Informationspaket mit einem integrierten Automatismus zu verstehen. Der Automatismus sorgt dafür, dass bei jedem Zugriff eine Ergänzung der Informationen im zugriffssensitiven Informationspaket erfolgt. Der Begriff "zugriffssensitiv" drückt somit aus, dass das Informationspaket quasi selbstständig auf einen Zugriff hin den Automatismus einer Ergänzung der Informationen vornimmt. Die Ergänzung der Informationen kann beispielsweise durch einen Zugriffszähler, der softwareseitig, beispielsweise als Web-Anwendung, durch die loT-Plattform 6 zur Verfügung gestellt werden kann, implementiert sein, so dass die Anzahl der Zugriffe nachgehalten wird. Es können anhand der Zugriffsinformationen bestimmte Aktionen ausgelöst werden, die insbesondere vordefiniert sein können.

Ein Gateway-Informationspaket ist als eine Art Zwischenspeicher für Informationen zu verstehen. Verschiedene Kommunikationsvorrichtungen 10, 20, 30, beispielsweise von Nutzern N1, N2 und N3 können auf das Gateway-Informationspaket zugreifen und ohne eine direkte gegenseitige Adressierung miteinander kommunizieren. Adressiert wird dabei insbesondere nur die digitale Repräsentation 101`, 102', 103` des physischen Objekts 101, 102, 103, dessen Informationsträger gelesen wurde, oder genau gesagt das Gateway-Informationspaket. Die verschiedenen Nutzer N1, N2 und N3 können gleichzeitig oder zu verschiedenen Zeitpunkten auf das Gateway-Informationspaket zugreifen und Informationen, die einer der Nutzer N1, N2 oder N3 oder mehrere Nutzer dort hinterlegt hat bzw. haben. Es erfolgt somit eine Kommunikation zwischen verschiedenen Nutzern, wobei eine direkte Adressierung der Nutzer bzw. der Kommunikationsvorrichtungen 10, 20, 30 der Nutzer entfällt.

Ein Beispiel für ein physisches Objekt 101, 102, 103 mit einer digitalen Repräsentation 101', 102', 103', dessen Informationscontainer 101a, 102a, 103a besonders vorteilhaft ein Gateway-Informationspaket enthalten kann, ist ein öffentlicher Trinkbrunnen. Dieser Trinkbrunnen kann beispielsweise im Rahmen eines Geocaching-Spiels mit einem Informationsträger I ausgerüstet sein, so dass Teilnehmer des Geocaching-Spiels miteinander kommunizieren können. Da sich Teilnehmer eines Geocaching-Spiels in der Regel vorher nicht kennen, also untereinander fremd sind, ist es in der Regel unerwünscht, seine Identität untereinander sofort preiszugeben. Zugleich ist ein sozialer Austausch, also eine Kommunikation, gewünscht. Die Teilnehmer eines Geocaching-Spiels befinden sich jedoch oftmals nicht zur gleichen Zeit am gleichen Ort, so dass eine persönliche verbale Kommunikation nicht möglich ist. Durch die objektbezogene Kommunikation wird eine anonyme Kommunikation unter den Teilnehmern vorteilhaft ermöglicht. Findet das Geocaching-Spiel beispielsweise in einem Wald statt, können ausgewählte Bäume mit Informationsträgern I ausgestattet werden.

In jedem Fall kann die Ausstattung mit einem Informationsträger I insbesondere temporär sein, beispielsweise zur Durchführung eines Spiels, so dass der Informationsträger I nach Bedarf auch wieder entfernt und/oder werden kann.

Der Kommunikation über die Informationspakete ist der Vorteil gemein, dass Daten, die auf Personen - insbesondere auf Nutzer - schließen lassen, nicht erforderlich sind. So kann eine dezentrale und anonyme Kommunikation über Objekte realisiert werden.

Dem Informationspaketepool 7 können nach Belieben vorkonfigurierte Informationspakete hinzugefügt werden und es können vorkonfigurierte Informationspakete aus dem Informationspaketepool 7 entfernt und es können vorkonfigurierte Informationspakete des Informationspaketepools 7 bearbeitet werden. Das Hinzufügen oder Entfernen von Informationspaketen in den bzw. aus dem Informationspaketepool 7 kann insbesondere durch einen Informationsemittenten 4 erfolgen. Der Informationsemittent 4 greift dazu auf die loT-Plattform 6 zu und nimmt selbstständig etwaige gewünschte Anpassungen des Informationspaketepools 7 vor. Es kann für die Anpassung des Informationspaketepools 7 durch einen Informationsemittenten 4 erforderlich sein, dass der Informationsemittenten 4 eine gesonderte Authentifizierung vornehmen muss, um zu prüfen, ob eine Anpassung des Informationspaketepools 7 durch den jeweiligen Informationsemittenten 4 zulässig ist oder nicht.

Auf der loT-Plattform ist ferner für jede digitale Repräsentation 101, 102, 103 ein Informationscontainer 101a, 102a, 103a vorgesehen. In den jeweiligen Informationscontainern 101a, 102a, 103a können Informationspakete vorliegen. Die Informationscontainer 101a, 102a, 103a der jeweiligen digitalen Repräsentationen 101, 102, 103 umfassen ausgewählte Informationspakete, die spezifisch für die jeweilige digitale Repräsentation 101', 102', 103' bzw. für das jeweilige physische Objekt 101, 102, 103, das mit der jeweiligen digitalen Repräsentation 101', 102', 103' assoziiert ist, verknüpft sind. Ein Informationscontainer 101a, 102a, 103a kann beispielsweise zumindest teilweise automatisch mit Informationspaketen aus dem Informationspaketepool 7 gefüllt werden, oder es können Informationspakete aus dem Informationspaketepool 7 aktiv durch einen Informationsemittenten 4 in einen Informationscontainer 101a, 102a, 103a hinzugefügt werden. Im Falle eines vorkonfigurierten Informationscontainers 101a, 102a, 103a, das bereits Informationspakete enthält, können Informationspakete, insbesondere von einem Informationsemittenten 4, daraus wieder entfernt werden. So können auf einfache Weise gewünschte Informationspakete in einen Informationscontainer 101a, 102a, 103a eingepflegt bzw. aus einem Informationscontainer 101a, 102a, 103a entfernt werden. Ein Informationscontainer 101a, 102a, 103a kann insbesondere durch einen Informationsemittenten 4 angepasst werden. Der Informationsemittent kann vorzugsweise auch neue Informationspakete, die vorher nicht im Informationspaketepool 7 vorhanden waren, erstellen und hinzufügen.

Die loT-Plattform 6 verwaltet die Zugriffsrechte und/oder Bearbeitungsrechte, die ein Informationsemittent 4 in Bezug auf den Informationspaketepool 7 und/oder Informationscontainer 101a, 102a, 103a hat. So kann es bestimmten Informationsemittenten 4 erlaubt sein, die Informationscontainer 101a, 102a, 103a bestimmter digitaler Repräsentationen 101', 102', 103' zu bearbeiten, wobei ihm jedoch die Bearbeitung des Informationspaketepools 7 verwehrt wird. Auch kann es bestimmten Informationsemittenten 4 erlaubt werden, nur den Informationspaketepool 7 anzupassen. Die Bearbeitung durch einen Informationsemittenten 4 umfasst insbesondere die Erstellung, Hinzufügung, Entfernung oder Veränderung von Informationspaketen.

Die Kommunikationsvorrichtungen 10, 20, 30 können Informationsträger I der physischen Objekte 101, 102, 103 lesen. Dies kann insbesondere, wie in Figur 5 dargestellt, über eine Leseeinrichtung 40 erfolgen, welche beispielsweise als Kamera oder als NFC- oder RFID-Leseeinrichtung ausgebildet sein kann. Sie können insbesondere mobile Endgeräte von Nutzern sein. Jedes physische Objekt 101, 102, 103 weist einen Informationsträger I mit einem Identifikationskennzeichen UID auf, mit dem die jeweiligen physischen Objekte 101, 102, 103 eindeutig einer entsprechenden digitalen Repräsentation 101', 102', 103' in der IoT-Plattform 6 zuordenbar sind. Um auf die digitale Repräsentation 101', 102', 103' zuzugreifen, nachdem eine Kommunikationsvorrichtung 10, 20, 30 den jeweiligen Informationsträger I gelesen hat, wandelt die jeweilige Kommunikationsvorrichtung 10, 20, 30 das Identifikationskennzeichen UID vorzugsweise in einen Persistent Identifier PID um. Der Persistent Identifier PID kann besonders vorteilhaft das Identifikationskennzeichen UID, das insbesondere als Unique Identifier ausgebildet ist, umfassen bzw. aus diesem gebildet sein, um eine eindeutige Zuordnung zu einer digitalen Repräsentation 101', 102', 103` über einen Datennetzwerk zu ermöglichen. Als Datennetzwerk kann beispielsweise ein Mobilfunknetz verwendet werden. Der Persistent Identifier PID kann insbesondere als Internet-Link ausgebildet sein, so dass die jeweilige Kommunikationsvorrichtung 10, 20, 30 über das Internet auf die digitale Repräsentation 101`, 102', 103' bzw. auf den Informationscontainer 101a, 102a, 103a der jeweiligen digitalen Repräsentation 101', 102', 103' zugreifen kann, um das Vorhandensein einer etwaigen Informationspaketen für das jeweilige physische Objekt 101, 102, 103 zu überprüfen und auf diese zuzugreifen. Ein solcher Zugriff kann durch mehrere Kommunikationsvorrichtungen 10, 20, 30 zeitgleich erfolgen.

Der Informationsträger I eines physischen Objekts 101, 102, 103 muss nicht direkt gelesen werden. Auch ein indirektes Lesen ist möglich. So kann beispielsweise eine Trägervorrichtung, die eine Kommunikationsvorrichtung sein kann, den Informationsträger I zu einem Zeitpunkt t = 0 lesen und die gelesenen Informationen, insbesondere das Identifikationskennzeichen UID, lokal speichern. Weitere Kommunikationsvorrichtungen können zu einem Zeitpunkt t > 0, also zu einem späteren Zeitpunkt, wahlweise den Informationsträger am physischen Objekt 101, 102, 103 oder den lokal auf der Trägervorrichtung gespeicherten Informationsträger, der nunmehr ein virtuelles Duplikat des Informationsträgers I ist, lesen. In beiden Fällen kann ein Zugriff auf die loT-Plattform 6 und auf die jeweilige digitale Repräsentation 101', 102', 103` erfolgen. Es wird somit aus funktionaler Sicht die Existenz bzw. das Vorhandensein des physischen Objekts 101, 102, 103 ersetzt. Dadurch muss das physische Objekt 101, 102, 103 besonders vorteilhaft nicht mitgeführt werden, um den Informationsträger I verfügbar zu haben.

Im Speziellen in Figur 1 ist schematisch dargestellt, dass eine der Kommunikationsvorrichtungen 10, 20, 30, nämlich die Kommunikationsvorrichtung 10, eines der physischen Objekte 101, 102, 103, nämlich auf das physische Objekt 101 liest und auf die loT-Plattform 6 bzw. die digitale Repräsentation 101` und den Informationscontainer 101a zugreift. Es besteht ein Kommunikationskanal zwischen der loT-Plattform 6 und der Kommunikationsvorrichtung 10. Der Informationscontainer 101a kann verschiedene Arten von Informationspaketen enthalten. Im einfachsten Fall enthält der Informationscontainer 101a ein statisches Informationspaket mit Informationen über das physische Objekt 101.

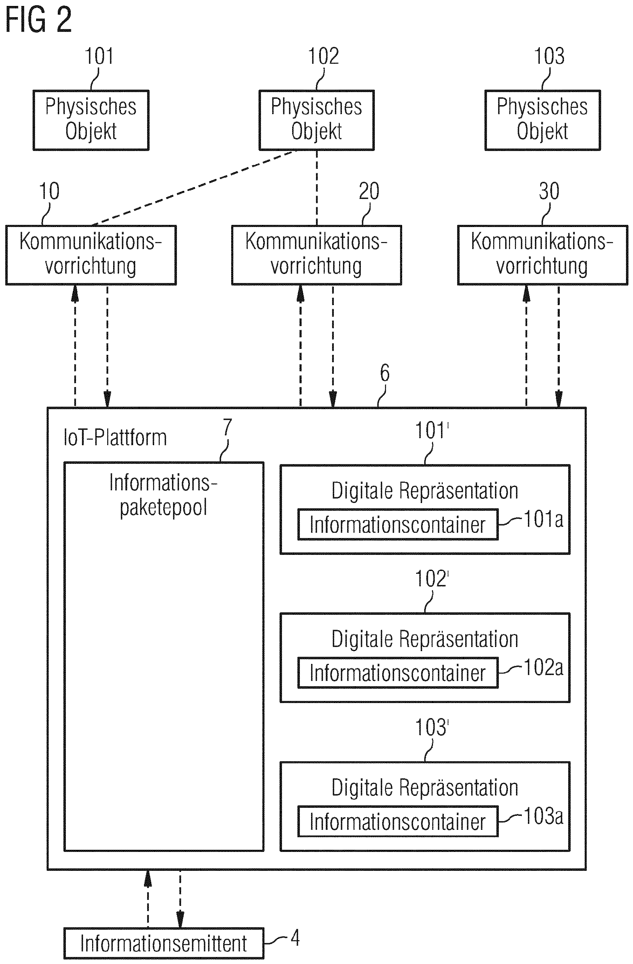

Im Speziellen in Figur 2 liest die Kommunikationsvorrichtung 10 und die Kommunikationsvorrichtung 20 den Informationsträger I des physischen Objekts 102. Die Kommunikationsvorrichtungen 10, 20 greifen beide auf die loT-Plattform 6 bzw. die digitale Repräsentation 102` und den Informationscontainer 102a zu. Es besteht ein Kommunikationskanal zwischen der loT-Plattform 6 und der Kommunikationsvorrichtung 10 und ein weiterer Kommunikationskanal zwischen der loT-Plattform 6 und der Kommunikationsvorrichtung 20. Der Informationscontainer 102a kann verschiedene Arten von Informationspaketen enthalten.

Gemäß einem ersten Beispiel enthält der Informationscontainer 102a ein statisches Informationspaket mit Informationen über das physische Objekt 102. Auf dieses kann zeitgleich durch die Kommunikationsvorrichtungen 10, 20 zugegriffen werden.

Gemäß einem zweiten Beispiel enthält der Informationscontainer 102b ein dynamisches Informationspaket, das eine Bedienungsanleitung zur Handhabung des physischen Objekts 102 umfasst, wobei die Bedienungsanleitung als eine Art "Wiki" aufgebaut ist, so dass verschiedene Nutzer ihre Erfahrungen in die Bedienungsanleitung einpflegen können. Ein Nutzer der Kommunikationsvorrichtung 10 kann somit seine Erfahrungen in das dynamische Informationspaket im Informationscontainer 102a der digitalen Repräsentation 102` einpflegen, so dass ein Nutzer der Kommunikationsvorrichtung 20 zeitgleich oder zu einem späteren Zeitpunkt die eingepflegten weiteren Handhabungsinformationen zur Handhabung des physischen Objekts 102 abrufen kann. Der Nutzer der Kommunikationsvorrichtung 20 kann seinerseits wiederum eigene Erfahrungen in das dynamische Informationspaket einbringen und/oder die eingepflegten Informationen des Nutzers der Kommunikationsvorrichtung 10 korrigieren.

Gemäß einem dritten Beispiel umfasst der Informationscontainer 102a ein zugriffssensitives Informationspaket, wobei mit jedem Zugriff ein Zähler hochzählt. Nach beispielsweise 100 Zugriffen, wird jeder weitere Zugriff verwehrt.

Gemäß einem vierten Beispiel enthält der Informationscontainer 102a ein Gateway-Informationspaket, wobei ein Nutzer der Kommunikationsvorrichtung 10 Informationen mit einem Nutzer der Kommunikationsvorrichtung 20 - gegebenenfalls ohne dessen Identität zu kennen - mit diesem teilen möchte. Hierzu sendet der Nutzer der Kommunikationsvorrichtung 10 mit seiner Kommunikationsvorrichtung 10 Informationen an die loT-Plattform 6 bzw. an das Gateway-Informationspaket im Informationscontainer 102a der digitalen Repräsentation 102', während ein Nutzer der Kommunikationsvorrichtung 20 zeitgleich oder zu einem späteren Zeitpunkt auf das Gateway-Informationspaket zugreift und diese von dem Nutzer der Kommunikationsvorrichtung 10 geteilte Information abrufen kann.

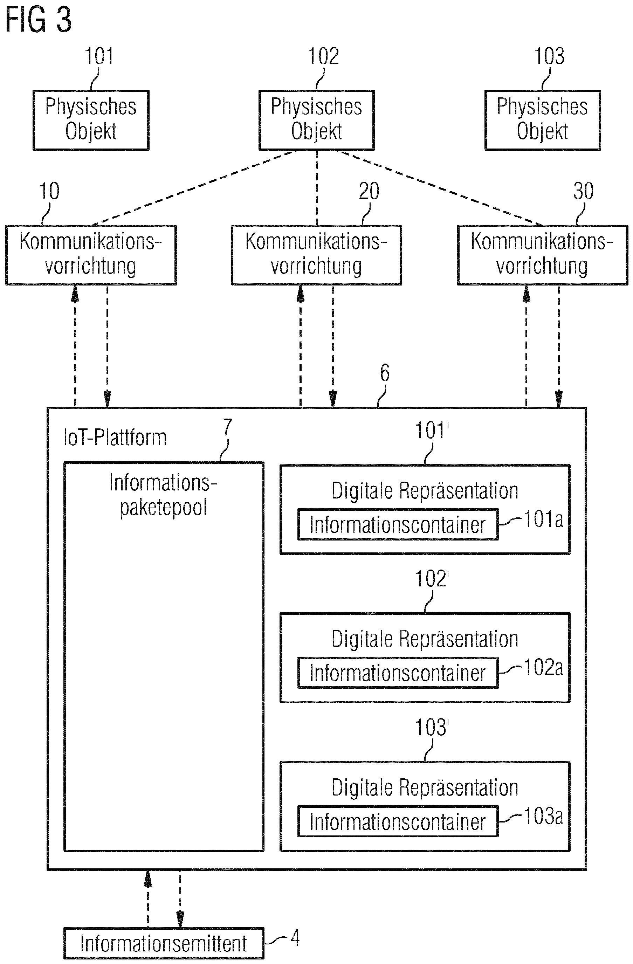

Im speziellen in Figur 3 lesen die Kommunikationsvorrichtung 10, die Kommunikationsvorrichtung 20 und die Kommunikationsvorrichtung 30 den Informationsträger I des physischen Objekts 102. Die Kommunikationsvorrichtungen 10, 20, 30 greifen auf die loT-Plattform 6 bzw. die digitale Repräsentation 102` und den Informationscontainer 102a zu. Es besteht jeweils ein Kommunikationskanal zwischen der loT-Plattform 6 und der Kommunikationsvorrichtung 10, zwischen der loT-Plattform 6 und der Kommunikationsvorrichtung 20, und der loT-Plattform 6 und der Kommunikationsvorrichtung 30. Auch hier kann der Informationscontainer 102a verschiedene Arten von Informationspaketen enthalten. Die Abrufung von Informationen bzw. die objektbezogene Kommunikation erfolgt wie vorhergehend beschrieben.

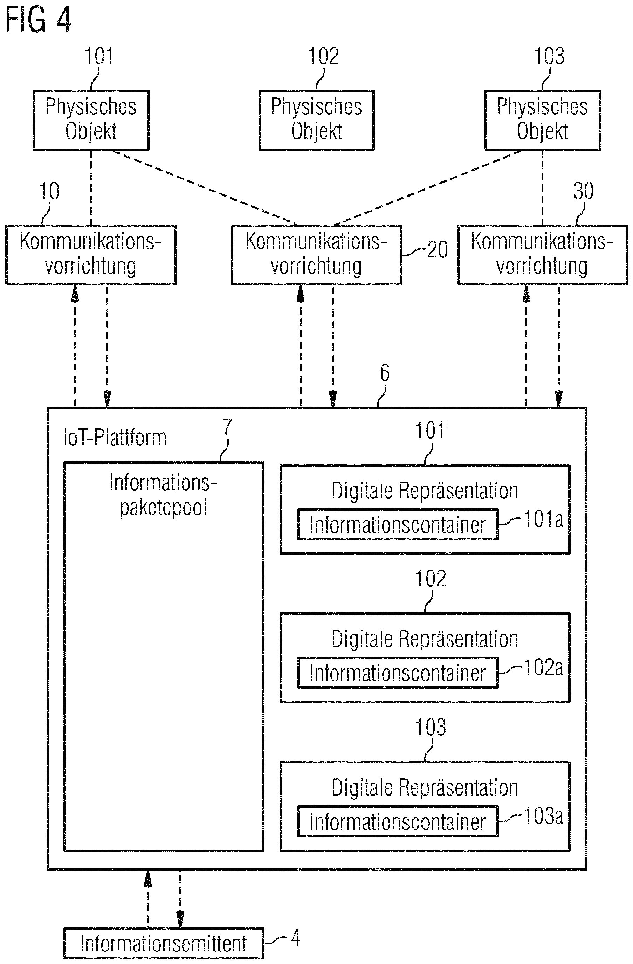

Im speziellen in Figur 4 lesen die Kommunikationsvorrichtung 10 und die Kommunikationsvorrichtung 20 den Informationsträger I des physischen Objekts 101, während die Kommunikationsvorrichtung 20 und die Kommunikationsvorrichtung 30 den Informationsträger I des physischen Objekts 103 lesen. Die Kommunikationsvorrichtungen 10, 20 greifen beide auf die loT-Plattform 6 bzw. die digitale Repräsentation 101' und den Informationscontainer 101a zu, während die Kommunikationsvorrichtungen 20, 30 beide auf die loT-Plattform 6 bzw. die digitale Repräsentation 103' und den Informationscontainer 103a zugreifen. Es besteht ein Kommunikationskanal zwischen der loT-Plattform 6 und der Kommunikationsvorrichtung 10, ein weiterer Kommunikationskanal zwischen der IoT-Plattform 6 und der Kommunikationsvorrichtung 20 und ein weiterer Kommunikationskanal zwischen der loT-Plattform 6 und der Kommunikationsvorrichtung 30. Die Kommunikationsvorrichtung 20 greift über den Kommunikationskanal gleichzeitig auf die digitalen Repräsentation 101' und 103' zu. Ein Informationsaustausch bzw. eine objektbezogene Kommunikation kann wie vorhergehend beschrieben erfolgen.

In Figur 5 ist schematisch eine Situation dargestellt, in der eine als mobiles Endgerät ausgebildete Kommunikationsvorrichtung 10 mit einer als Kamera ausgebildeten Leseeinrichtung 40 einen Informationsträger I eines physischen Objekts 101 einliest. Gleichzeitig oder zeitlich versetzt kommuniziert das mobile Endgerät mit einer loT-Plattform 6, beispielsweise um etwaige vorliegende Informationspakete im Informationscontainer 101a, 102a, 103a einer digitalen Repräsentation 101, 102, 103 eines jeweiligen physischen Objekts 101, 102, 103 abzurufen bzw. zu überprüfen. Das mobile Endgerät kann ein mobiles Endgerät eines Besitzers eines physischen Objekts 101, 102, 103 sein, ein mobiles Endgerät eines Besuchers oder Nutzers eines jeweiligen physischen Objekte 101, 102, 103, oder ein mobiles Endgerät einer Person, der der Informationsträger I lediglich zur objektbezogenen Kommunikation direkt oder indirekt zur Verfügung gestellt wird. Beim Lesen des Informationsträgers I wird insbesondere das Identifikationskennzeichen erfasst.

Eine Kommunikationsvorrichtung kann auch als Trägervorrichtung genutzt werden: Nachdem das Identifikationskennzeichen UID erfasst worden ist, kann es über vorhandene Kommunikationsschnittstellen der als Trägervorrichtung verwendeten Kommunikationsvorrichtung, beispielsweise über Bluetooth-Schnittstellen, WiFi-Schnittstellen, NFC-Schnittstellen oder über eine Anzeigevorrichtung zur Anzeige eines visuellen Datencodes (z. B. QR-Code) virtuell weitergegeben werden. Mit anderen Worten: die als Trägervorrichtung verwendete Kommunikationsvorrichtung kann in dieser Konstellation ein physisches Objekt 101, 102, 103 ersetzen, so dass dieses nicht mitgeführt werden muss.

Nachfolgend werden - nicht abschließend - verschiedene Benutzungsszenarien der vorliegenden Erfindung erläutert:
A.
   Ein Endverbraucher kauft im lokalen Einzelhandel ein Kölsch-Glas. Das Kölsch-Glas weist einen Informationsträger I auf, der als QR-Code ausgebildet ist. Der QR-Code umfasst ein Identifikationskennzeichen UID, mit dem das Kölsch-Glas bzw. das physische Objekt 101 eindeutig einer digitalen Repräsentation 101` auf einer loT-Plattform 6 zuordenbar ist. Die digitale Repräsentation 101' zum Kölsch-Glas wurde vorab, beispielsweise zum Zeitpunkt der Herstellung des Kölsch-Glases erstellt. Ein Informationsemittent 4, beispielsweise der Hersteller des Kölsch-Glases hat in der entsprechenden digitalen Repräsentation 101` in dem jeweiligen Informationscontainer 101a ein statisches Informationspaket mit Informationen zur Geschichte der Bierbraukunst der Stadt Köln bereitgestellt. Ferner hat der Informationsemittent 4 ein dynamisches Informationspaket bereitgestellt, in dem verschiedene Sorten Kölsch unvollständig aufgelistet sind, wobei ferner Bewertungsmasken hinsichtlich Geschmack und Geruch für jede Sorte Kölsch hinterlegt sind. Der Endverbraucher, der das Kölsch-Glas gekauft hat, liest mit seinem mobilen Endgerät den Informationsträger I und es baut sich über das mobile Datennetz ein Kommunikationskanal zur loT-Plattform 6 auf. Dabei werden keine Daten übertragen, die auf die Person des Endverbrauchers rückschließen lassen. Es handelt sich lediglich um objektbezogene Daten, also um Daten, die das physische Objekt 101 eindeutig identifizieren und eine Zuordnung zu einer bestimmten zugehörigen digitalen Repräsentation 101' ermöglichen. Das Informationskennzeichen UID auf dem Informationsträger I des Kölsch-Glases wird beim Lesen erfasst. Anschließend wird aus dem Identifikationskennzeichen UID ein als Internet-Link ausgebildeter Persistent Identifier PID erstellt, der insbesondere das Identifikationskennzeichen UID umfassen kann. Über eine Internetverbindung greift das mobile Endgerät auf die loT-Plattform 6 zu, indem es den Internet-Link aufruft. Dadurch wird es direkt zu der entsprechenden digitalen Repräsentation 101' geführt und kann auf den Informationscontainer 101a zugreifen, um auf die Informationspakete zuzugreifen. Er bekommt auf seinem mobilen Endgerät die beiden verfügbaren Informationspakete angezeigt, die verfügbar sind und wählt durch eine Eingabe an seinem mobilen Endgerät das statische Informationspaket aus. Es wird daraufhin als Audio, Video oder in Textform die Information zur Geschichte der Bierbraukunst der Stadt Köln präsentiert.
B.
   Es handelt sich um dieselbe Konstellation, wie im Benutzungsszenario A, wobei der Endverbraucher in seiner Freizeit gerne verschiedene Sorten Kölsch, auch von kleineren eher unbekannten Brauhäusern, probiert. Er hat das Bedürfnis seine Erfahrungen zu teilen und die Erfahrungen von anderen Endverbrauchern zu sehen. Dazu wählt er auf seinem mobilen Endgerät das dynamische Informationspaket aus und sieht die Liste mit den verschiedenen Sorten Kölsch. Immer wenn er eine neue Sorte probiert, pflegt er die Informationen in das dynamische Informationspaket ein und macht diese auch anderen Nutzern, beispielsweise seinen Freunden, verfügbar. Umgekehrt liest er interessiert die Erfahrungen, die durch andere Nutzer eingepflegt wurden. Das dynamische Informationspaket wird als eine Art "Wiki" verwendet.
C.
   Es handelt sich um dieselbe Konstellation, wie im Benutzungsszenario A, wobei im Informationscontainer 101a der digitalen Repräsentation 101` ferner durch einen Informationsemittenten 4 ein zugriffssensitives Informationspaket hinzugefügt wurde. Dieses zugriffssensitive Informationspaket zählt die erfolgten Zugriffe auf die digitale Repräsentation und vorzugsweise zählt es spezifisch für jedes im Informationscontainer 101a hinterlegte Informationspaket die Anzahl der Zugriffe. Je nach Berechtigung, kann nur der Informationsemittent 4 oder jeder Nutzer, der mit seiner Kommunikationsvorrichtung 10, 20, 30 auf das zugriffssensitive Informationspaket zugreift, sehen, wie oft auf die digitale Repräsentation 101' und/oder auf die einzelnen hinterlegten Informationspakete im Informationscontainer 101a zugegriffen wurde. Ferner kann das zugriffssensitive Informationspaket auch Informationen darüber speichern, zu welcher Uhrzeit und/oder Tageszeit Zugriffe erfolgten. Es können vielfältige Rückschlüsse aus dieser Information gezogen werden, beispielsweise auf den Interessantheitsgrad der im Informationscontainer 101a hinterlegten Informationspakete, die Tageszeit, zu der der Kölsch-Konsum bevorzugt erfolgt etc.
D.
   In diesem Benutzungsszenario wird das erfindungsgemäße Verfahren von einem Gastwirt verwendet, um mit seinen Gästen zu kommunizieren und seinen Gästen umgekehrt zu ermöglichen, mit ihm zu kommunizieren. Die Kommunikation erfolgt dabei objektbezogen und ohne Austausch von Informationen, die auf die Identität von beteiligten Personen schließen lassen. Der Gastwirt verfügt hierzu über eine Anzahl von Tischen, an denen Gäste bewirtet werden. Jeder Tisch ist in diesem Benutzungsszenario ein physisches Objekt 101, 102, 103 im Sinne der vorliegenden Erfindung und ist mit einem jeweiligen Informationsträger I ausgestattet. Zu jedem Tisch gibt es eine eindeutig zuordenbare digitale Repräsentation 101`, 102', 103' auf einer loT-Plattform 6. In den jeweiligen Informationscontainern 101a, 102a, 103a der jeweiligen digitalen Repräsentationen 101, 102, 103 ist jeweils ein Gateway-Informationspaket und ein zugriffssensitives Informationspaket hinterlegt. Die Informationsträger I auf den Tischen können eine Aufschrift aufweisen, die den Gast auffordert, mit einem mobilen Endgerät den Informationsträger zu scannen. Tut ein Gast dies, kann dieser auf die im jeweiligen Informationscontainer 101a, 102a, 103a verfügbaren Informationspakete zugreifen. Das Gateway-Informationspaket kann insbesondere dazu genutzt werden, um dem Gastwirt eine Nachricht zu schreiben, dass etwas mit dem Essen nicht stimmt oder am Tisch etwas fehlt. Auch kann das Gateway-Informationspaket dazu genutzt werden, die Rechnung zu ordern oder den Service zu loben. Der Gastwirt verfügt über ein mobiles Endgerät, mit dem er mit der loT-Plattform 6 kommuniziert, um in Echtzeit auf die Informationspakete zuzugreifen. Das zugriffssensitive Informationspaket zählt bei jedem Zugriff auf die digitale Repräsentation hoch und speichert die Uhrzeit des Zugriffs. Diese Information kann der Gastwirt insbesondere dazu verwenden, um herauszufinden, welche Tische für Kunden am attraktivsten sind. Beispielsweise kann der Gastwirt über runde, quadratische und rechteckige Tische verfügen, die jeweils an verschiedenen Stellen einer Außenterrasse angeordnet sind. Da jeder Tisch eine eigene digitale Repräsentation 101`, 102', 103' hat, die dem jeweiligen Tisch eindeutig zuordenbar ist, können die Zugriffe, die durch die zugriffssensitiven Informationspakete aufgenommen wurden, ohne Weiteres den Tischen auf der Außenterrasse zugeordnet werden. Unter der Annahme, dass Gäste sich stets aus den freien Tischen denjenigen aussuchen, der ihnen am attraktivsten erscheint, kann der Gastwirt aus der Anzahl der Zugriffe wertvolle Informationen ableiten. Der Gastwirt wird insbesondere in die Lage versetzt, die Tischtypen und die Anordnung der Tische auf der Außenterrasse zu optimieren, um möglichst viele Gäste anzusprechen.
E.
   Diesem Benutzungsszenario liegt die Konstellation des Benutzungsszenarios D zugrunde, wobei in den Informationscontainern 101a, 102a, 103a ferner ein erstes statisches Informationspaket und einer zweites statisches Informationspaket hinterlegt ist. Im ersten statischen Informationspaket ist die Speisekarte der Gastwirtschaft abrufbar hinterlegt. Im zweiten statischen Informationspaket ist die Geschichte der Gastwirtschaft abrufbar hinterlegt. So kann ein Gast auf einfache Weise die Speisekarte auf sein mobiles Endgerät abrufen und in der Wartezeit, bis das bestellte Essen zu Tisch gebracht wird, mehr über die Geschichte der Gastwirtschaft erfahren.
F.
   In diesem Benutzungsszenario wird das erfindungsgemäße Verfahren im Rahmen eines Geocaching-Spiels verwendet. Geocaching wird im deutschsprachigen Raum auch als GPS-Schnitzeljagd bezeichnet. Es handelt sich dabei um eine Art Schatzsuche, die sich seit der Jahrtausendwende wachsender Beliebtheit erfreut und von immer mehr Menschen in der Freizeit praktiziert wird. Die Verstecke bzw. "Geocaches" werden anhand geographischer Koordinaten im Internet veröffentlicht und können anschließend mithilfe eines GPS-Empfängers gesucht werden. Ein Geocache ist in der Regel ein wasserdichter Behälter, in dem sich ein Logbuch befindet. Der Besucher kann sich in das Logbuch eintragen, um seine erfolgreiche Suche zu dokumentieren und anderen Teilnehmern anzuzeigen. Wesentlich ist dabei, dass andere Menschen, die nicht am Spiel teilnehme, das Versteck nicht finden. Ferner sollen die Teilnehmer untereinander anonym bleiben.

Das erfindungsgemäße Verfahren ermöglicht es, das Logbuch zu ersetzen, eine Kommunikation zwischen Teilnehmern des Spiels zu ermöglichen und die Unauffindbarkeit des Verstecks zu erhöhen. Hierzu wird, beispielsweise bei einem Versteck im Wald, ein Baum zu einem erfindungsgemäßen physischen Objekt 101 gemacht, indem ein Informationsträger I, der zu einer digitalen Repräsentation 101' führt, an den Baum angebracht wird. Ein Informationsträger I kann ein kleiner QR-Code oder ein kleiner NFC-Chip sein, so dass er besser versteckbar und unauffälliger ist als ein Logbuch.

Im Informationscontainer 101a der digitalen Repräsentation 101` ist ein zugriffssensitives Informationspaket, ein dynamisches Informationspaket und ein Gateway-Informationspaket enthalten. Findet ein Teilnehmer das Versteck, liest dieser mit seinem mobilen Endgerät den Informationsträger I ein und es wird ein Kommunikationskanal zur loT-Plattform 6 hergestellt. Auf dem mobilen Endgerät bekommt der Teilnehmer die verfügbaren Informationspakete angezeigt.

Das zugriffssensitive Informationspaket zählt die Anzahl der Zugriffe auf die digitale Repräsentation und speichert zugleich die Uhrzeit der Zugriffe. So kann ein Spiele-Administrator des Geocaching-Spiels die Frequentierung des Verstecks nachhalten und basierend darauf das Versteck entfernen oder die Position des Verstecks bei Bedarf anpassen, um es beispielsweise leichter auffindbar zu machen.

In das dynamische Informationspaket können Teilnehmer Freitext oder Bilder einpflegen. Es ersetzt somit das Logbuch und ermöglicht zugleich auf einfache Weise, das Einpflegen von Bildern, die mit dem mobilen Endgerät aufgenommen werden können. So kann ein Teilnehmer, der beispielsweise in ein starkes Unwetter gerät, ein Foto von der Wetterlage machen und als spannende Zusatzinformation zu seinem Freitext hinzufügen.

Durch einen Zugriff auf das Gateway-Informationspaket, können verschiedene Teilnehmer, die das Versteck gefunden haben und den Informationsträger I eingelesen haben, miteinander kommunizieren, ohne Informationen preiszugeben, die auf deren Identitäten schließen lässt. So kann es beispielsweise sein, dass eine Gruppe aus 30 Personen, die an einem Geocaching-Spiel teilnehmen möchten, von einem Spiele-Administrator in 6 Untergruppen mit jeweils 5 Personen aufgeteilt wird. Die Personen innerhalb einer Untergruppe können persönlich miteinander kommunizieren, jedoch kann es das Bedürfnis geben, mit allen Personen aus der Gruppe zu kommunizieren. Eine Kommunikation mit allen Personen der Gruppe kann mittels des Gateway-Informationspakets auf einfache Weise ermöglicht werden. So kann eine Person auf einer ersten Untergruppe anderen Personen in anderen Gruppen beispielsweise Fotos schicken.

### G.

Nachfolgend werden weitere Möglichkeiten in Kurzform aufgezeigt, im Rahmen derer die vorliegende Erfindung vorteilhaft verwendet werden kann:
In Informationspaketen, die in Informationscontainern 101a, 102a, 103a von digitalen Repräsentationen 101', 102', 103` jeweiliger physischer Objekte 101, 102, 103 vorliegen, können für Nutzer Incentives, Gutscheincodes oder Teilnahmeberechtigungen hinterlegt sein, die beispielsweise die Teilnahme an einem Gewinnspiel ermöglichen. Ein Gastronomiebetrieb kann Gästen beispielsweise eine Teilnahme an Gewinnspielen über mobile Endgeräte ermöglichen, die zu einer gegenwärtigen Situation passen. Auf einem Bierglas, das ein Label einer bestimmten Brauerei trägt, kann ein Spiel hinterlegt sein, bei dem der Gast anonym teilnehmen kann, um dabei beispielsweise ein Freigetränk zu gewinnen.

Kommunikationsvorrichtungen 10, 20, 30 können auch Servicegeräte sein, die physische Objekte 101, 102, 103 warten. Beispielsweise kann eine Spülmaschine eines Gastwirts zum Reinigen von Biergläsern, die physische Objekte 101, 102, 103 im Sinne der Vorliegenden Erfindung sein können, eine solche Kommunikationsvorrichtung 10, 20, 30 sein. Bei jedem Spülgang liest die Spülmaschine die Informationsträger I der Biergläser in der Spülmaschine ein und greift auf die digitalen Repräsentationen 101', 102', 103' zu. Ein zugriffssensitives Informationspaket jeweils jedem Informationscontainer 101a, 102a, 103a der jeweiligen digitalen Repräsentationen 101', 102', 103' zählt bei jedem Spülgang um einen Zähler hoch. Nach einer vordefinierten Anzahl von Spülgängen bzw. Zugriffen, erhält der Gastwirt eine Nachricht, dass ein Bierglas ausgetauscht werden sollte. Alternativ oder zusätzlich kann die Spülmaschine abhängig von einer in den jeweiligen digitalen Repräsentationen 101', 102', 103' vorhandenen Informationen einen geeigneten Spülgang auswählen, der beispielsweise einem bestimmten Abnutzungsgrad der Biergläser Rechnung trägt. Der Abnutzungsgrad der Biergläser kann beispielsweise über Informationen eines zugriffssensitiven Informationspakets abgeleitet werden.

Ferner kann über ein Informationsträger I an einem Produkt, welches ein physisches Objekt 101, 102, 103 im Sinne der vorliegenden Erfindung ist, nachgewiesen und/oder nachgeprüft werden, ob es sich um ein Originalprodukt handelt. Hierzu können beispielsweise statische Informationspakete verwendet werden. Alternativ oder zusätzlich können Warnhinweise, Bedienungshinweise etc. hinterlegt sein.

Ferner können bestimmte Produkte, welche physische Objekte 101, 102, 103 im Sinne der vorliegenden Erfindung sind mit punktebasierten Bonusprogrammen versehen werden. Im Unterschied zu bekannten Bonusprogrammen, kann durch die objektbezogene Kommunikation von Informationen die Identität des Käufers des Produkts geschützt werden, da keinerlei Daten erforderlich sind, die auf Personen rückschließen lassen. Alternativ oder zusätzlich können erste Produkte Preisnachlässe beim Kauf zweiter Produkte triggern, wenn die Informationsträger I der ersten Produkte durch eine Kassenvorrichtung, die eine Kommunikationsvorrichtung 10, 20, 30 im Sinne der vorliegenden Erfindung sein kann, gelesen werden.

### Bezugszeichenliste

Informationsemittent 4
loT-Plattform 6
Informationspaketepool 7
Kommunikationsvorrichtung 10, 20, 30
Leseeinrichtung 40
Physische Objekte 101, 102, 103
Digitale Repräsentationen 101', 102', 103`
Informationsträger I
Identifikationskennzeichen UID
Informationscontainer 101a, 102a, 103a

## Patentansprüche

1. Verfahren zur Bereitstellung einer objektbezogenen anonymen Kommunikation zwischen Nutzern, welche über ein physisches Objekt (101, 102, 103) erfolgt, mit den Schritten:
Erstellen einer digitalen Repräsentation (101', 102', 103`) für ein physisches Objekt (101, 102, 103) auf einer IoT-Plattform (6), wobei das physische Objekt ein Alltagsgegenstand ist, beispielsweise ein Kaffeebecher oder ein Bierglas,
wobei der Alltagsgegenstand (101, 102, 103) mindestens einen Informationsträger (I) aufweist, wobei der Informationsträger (I) zumindest ein Identifikationskennzeichen (UID) umfasst, wobei der Alltagsgegenstand (101, 102, 103) anhand des Identifikationskennzeichens (UID) eindeutig seiner digitalen Repräsentation (101', 102', 103`) zuordenbar ist, und
wobei der Informationsträger (I) mittels einer Kommunikationsvorrichtung (10, 20, 30) eines Besitzers oder Nutzers des Alltagsgegenstands lesbar ist, um das Identifikationskennzeichen (UID) in einen als Internet-Link ausgebildeten Persistent Identifier (PID) umzuwandeln, um über das Internet auf die jeweilige digitale Repräsentation (101', 102', 103') auf der IoT-Plattform (6) zuzugreifen,
Bereitstellen eines konfigurierbaren Informationscontainers (101a, 102a, 103a) für die digitale Repräsentation (101 `, 102', 103`) auf der IoT-Plattform (6),
wobei der Informationscontainer (101a, 102a, 103a) ein Gateway-Informationspaket enthält, welches eine Kommunikation zwischen Kommunikationsvorrichtungen (10, 20, 30) ermöglicht,
wobei der Informationscontainer (101a, 102a, 103a) als Zwischenspeicher für Informationen agiert, die von Kommunikationsvorrichtungen (10, 20, 30) an die digitale Repräsentation (101', 102', 103`) kommuniziert werden, um durch Weiterleiten dieser Informationen an andere Kommunikationsvorrichtungen (10, 20, 30) eine objektbezogene Kommunikation zwischen verschiedenen Kommunikationsvorrichtungen (10, 20, 30) zu ermöglichen bei der die Kommunikationsvorrichtungen lediglich die digitale Repräsentation adressieren, sodass die Kommunikationsvorrichtungen, und damit ihre Nutzer, anonym bleiben,
Kommunizieren einer Übersicht aller im Informationscontainer (101a, 102a, 103a) vorliegenden Informationspakete an eine Kommunikationsvorrichtung (10, 20, 30), wenn diese den Informationsträger (I) des Alltagsgegenstands (101, 102, 103) direkt oder indirekt liest und auf die digitale Repräsentation (101', 102', 103`) zugreift, wobei eine Übersicht der Informationspakete durch eine Anzeigevorrichtung der Kommunikationsvorrichtung (10, 20, 30) angezeigt wird und bestimmte Informationspakete über eine Eingabe in die Kommunikationsvorrichtung (10, 20, 30) wählbar sind, die durch die Kommunikationsvorrichtung (10, 20, 30) von der IoT-Plattform (6) abgerufen werden sollen.

2. Verfahren nach Anspruch 1, wobei das Verfahren ferner umfasst:
- Bereitstellen eines Kommunikationskanals zwischen einer Kommunikationsvorrichtung (10, 20, 30) und der IoT-Plattform (6), wenn die Kommunikationsvorrichtung (10, 20, 30) den Informationsträger (I) des physischen Objekts (101, 102, 103) direkt oder indirekt liest, wobei die Kommunikationsvorrichtung (10, 20, 30) vorzugsweise über eine Internetverbindung verfügt, über die sie auf die jeweilige digitale Repräsentation (101', 102', 103`) zugreift.

3. Verfahren nach Anspruch 2, wobei die IoT-Plattform (6), wenn der Kommunikationskanal bereitgestellt ist, Informationspakete über den Kommunikationskanal sendet und Anfragen und/oder Informationen über den Kommunikationskanal empfängt.

4. Verfahren nach Anspruch 2 oder 3, wobei mehrere Kommunikationskanäle zu verschiedenen Kommunikationsvorrichtungen (10, 20, 30) bereitgestellt werden, wenn die verschiedenen Kommunikationsvorrichtungen (10, 20, 30) den Informationsträger (I) des physischen Objekts (101, 102, 103) direkt oder indirekt lesen.

5. Verfahren nach einem der vorhergehenden Ansprüche, wobei der Informationscontainer (101a, 102a, 103a) ferner mindestens ein statisches Informationspaket und/oder mindestens ein dynamisches Informationspaket und/oder mindestens ein zugriffssensitives Informationspaket enthalten kann,
wobei jedes statische Informationspaket ausschließlich durch Kommunikationsvorrichtungen (10, 20, 30) von Informationsemittenten (4) bearbeitbar ist,
wobei jedes dynamische Informationspaket durch Kommunikationsvorrichtungen (10, 20, 30) bearbeitbar ist, die nicht ausschließlich Informationsemittenten (4) sind,
wobei jedes zugriffssensitive Informationspaket automatisch aufgrund eines Zugriffs durch eine Kommunikationsvorrichtung (10, 20, 30) ergänzt wird.

6. Verfahren nach einem der vorhergehenden Ansprüche, wobei der Informationscontainer (101a, 102a, 103a) mindestens ein zugriffssensitives Informationspaket umfasst, wobei das zugriffssensitive Informationspaket mit jedem Zugriff durch eine Kommunikationsvorrichtung (10, 20, 30) mit einer zusätzlichen Information über den erfolgten Zugriff ergänzt wird, wobei das Ergänzen vorzugsweise den Zeitpunkt des Zugriffs und/oder die Art der Kommunikationsvorrichtung (10, 20, 30), die auf das Informationspaket zugegriffen hat, umfasst.

7. Verfahren nach einem der vorhergehenden Ansprüche, wobei das Verfahren ferner umfasst:
- Konfigurieren des Informationscontainers (101a, 102a, 103a) der digitalen Repräsentation (101', 102', 103'), wobei das Konfigurieren des Informationscontainers (101a, 102a, 103a) vorzugsweise durch eine Kommunikationsvorrichtung (10, 20, 30) eines Informationsemittenten (4) erfolgt, der vorzugsweise weder Besitzer noch Emittent des physischen Objekts (101, 102, 103) ist, umfassend:
i) Hinzufügen mindestens eines Informationspakets zum Informationscontainer (101a, 102a, 103a) der digitalen Repräsentation (101', 102', 103'), und/oder
ii) Entfernen mindestens eines Informationspakets aus dem Informationscontainer (101a, 102a, 103a) der digitalen Repräsentation (101', 102', 103').

8. Verfahren nach einem der vorhergehenden Ansprüche, ferner umfassend:
- Bereitstellen eines Informationspaketepools (7), der zur Verfügung stehende Informationspakete umfasst, wobei ein Erstellen neuer zur Verfügung stehender Informationspakete des Informationspaketepools (7) durch einen Informationsemittenten (4) erfolgen kann, der vorzugsweise weder Besitzer noch Emittent des physischen Objekts (101, 102, 103) ist.

9. Verfahren nach einem der vorhergehenden Ansprüche, wobei das Konfigurieren des Informationscontainers (101a, 102a, 103a) der digitalen Repräsentationen (101', 102', 103`) zumindest teilweise automatisch erfolgt, indem vorzugsweise die für die digitale Repräsentation (101', 102', 103`) zur Verfügung stehenden Informationspakete anhand eines bestimmten Merkmals der digitalen Repräsentation (101', 102', 103`) mittels maschinellen Lernens automatisch vorselektiert werden.

10. Verfahren nach einem der vorhergehenden Ansprüche, wobei beim Erstellen der digitalen Repräsentation (101', 102', 103`) eine zunächst nicht zugeordnete digitale Repräsentation (101', 102', 103`) erstellt wird, wobei dies unabhängig von der Existenz des physischen Objekts (101, 102, 103) erfolgt, wobei nachträglich ein Verknüpfen mit dem physischen Objekt (101, 102, 103) mittels des Identifikationskennzeichens (UID) erfolgen kann.

11. Verfahren nach einem der vorhergehenden Ansprüche, ferner umfassend:
- Emittieren des physischen Objekts (101, 102, 103) mit dem Informationsträger (I), wobei die Herstellung des physischen Objekts (101, 102, 103), die Herstellung des Informationsträgers (I) und die Hinzufügung des Informationsträgers (I) zu dem physischen Objekt (101, 102, 103) unabhängig voneinander, vorzugsweise durch mindestens zwei voneinander verschiedene Akteure, erfolgt.

12. Verfahren nach einem der vorhergehenden Ansprüche, ferner umfassend:
- Freigeben der digitalen Repräsentation (101', 102`, 103`) zur Konfiguration des Informationscontainers (101a, 102a, 103a), wobei das Freigeben zwingende Voraussetzung für die Konfiguration des Informationscontainers (101a, 102a, 103a) der digitalen Repräsentation (101', 102', 103`) ist, wobei vorzugsweise das Freigeben umfasst:
a) Erteilung der Erlaubnis zur Konfiguration, vorzugsweise an bestimmte Akteure, und/oder
b) Festlegung von Regeln für die Konfiguration, wobei die Regeln eine oder mehrere der folgenden Regelarten umfassen können:
b1) der jeweilige Informationscontainer (101a, 102a, 103a) darf ausschließlich statische Informationspakete enthalten;
b2) der jeweilige Informationscontainer (101a, 102a, 103a) darf ausschließlich dynamisch Informationspakete enthalten;
b3) der jeweilige Informationscontainer (101a, 102a, 103a) darf ausschließlich zugriffssensitive Informationspakete enthalten;
b4) der jeweilige Informationscontainer (101a, 102a, 103a) darf ausschließlich Gateway-Informationspakete enthalten;
b5) der jeweilige Informationscontainer (101a, 102a, 103a) muss zumindest ein statisches und zumindest ein dynamisches Informationspaket enthalten;
b6) der jeweilige Informationscontainer (101a, 102a, 103a) muss zumindest ein statisches und zumindest ein zugriffssensitives Informationspaket enthalten;
b7) der jeweilige Informationscontainer (101a, 102a, 103a) muss zumindest ein statisches Informationspaket und ein Gateway-Informationspaket enthalten;
b8) der jeweilige Informationscontainer (101a, 102a, 103a) muss zumindest ein dynamisches und zumindest ein zugriffssensitives Informationspaket enthalten;
b9) der jeweilige Informationscontainer (101a, 102a, 103a) muss zumindest ein dynamisches Informationspaket und ein Gateway-Informationspaket enthalten;
b10) der jeweilige Informationscontainer (101a, 102a, 103a) muss zumindest ein zugriffssensitives Informationspaket und ein Gateway-Informationspaket enthalten;
b11) der jeweilige Informationscontainer (101a, 102a, 103a) muss zumindest ein statisches und zumindest ein dynamisches und zumindest ein zugriffssensitives Informationspaket enthalten;
b12) der jeweilige Informationscontainer (101a, 102a, 103a) muss zumindest ein statisches Informationspaket und zumindest ein dynamisches Informationspaket und ein Gateway-Informationspaket enthalten;
b13) der jeweilige Informationscontainer (101a, 102a, 103a) muss zumindest ein statisches Informationspaket und zumindest ein zugriffssensitives Informationspaket und ein Gateway-Informationspaket enthalten;
b14) der jeweilige Informationscontainer (101a, 102a, 103a) muss zumindest ein dynamisches Informationspaket und zumindest ein zugriffssensitives Informationspaket und ein Gateway-Informationspaket enthalten;
b15) der jeweilige Informationscontainer (101a, 102a, 103a) darf ausschließlich bestimmte Informationspakete aus einem Informationspaketepool (7) enthalten;
b16) es gibt eine Höchstgrenze für die Anzahl der Informationspakete im jeweiligen Informationscontainer (101a, 102a, 103a);
b17) es gibt eine Mindestgrenze für die Anzahl der Informationspakete im jeweiligen Informationscontainer (101a, 102a, 103a);
b18) die Hinzufügung oder das Entfernen von Informationspaketen kann nur innerhalb bestimmter Zeitspannen und/oder zu bestimmten Tageszeiten erfolgen;
b19) die Hinzufügung oder das Entfernen von Informationspaketen kann nur erfolgen, wenn eine bestimmte weitere Bedingung neben der Freigabe der digitalen Repräsentation (101', 102', 103`) erfüllt ist.

13. loT-Plattform (6) konfiguriert, um die jeweiligen Schritte des Verfahrens nach einem der Ansprüche 1 bis 12 durchzuführen.

14. Computerprogramm, umfassend Befehle, die bei der Ausführung des Programms durch einen Computer diesen veranlassen, das Verfahren nach einem der Ansprüche 1 bis 12 auszuführen.

## Claims

1. A method for providing object-related anonymous communication between users that takes place based on a physical object (101, 102, 103), including the steps:
creating a digital representation (101', 102', 103') of a physical object (101, 102, 103) on an IoT platform (6), wherein the physical object is an everyday item, for example, a coffee cup or a beer glass,
wherein the everyday item (101, 102, 103) includes at least one information carrier (I), the information carrier (I) including at least one identifier (UID), the everyday item (101, 102, 103) being unequivocally assignable to its digital representation (101', 102', 103'), based on the identifier (UID), and
the information carrier (I) being readable by means of a communication device (10, 20, 30) of an owner or user of the everyday item, in order to convert the identifier (UID) to a persistent identifier (PID) which is designed as an internet link, in order to access the particular digital representation (101', 102', 103') on the IoT platform (6) via the internet,
providing a configurable information container (101a, 102a, 103a) for the digital representation (101', 102', 103') on the IoT platform (6),
wherein the information container (101a, 102a, 103a) includes a gateway information packet, the gateway information packet allowing communication between communication devices (10, 20, 30),
wherein the information container (101a, 102a, 103a) acts as a cache for information that is communicated from communication devices (10, 20, 30) to the digital representation (101', 102', 103') to allow, by relaying this information to other communication devices (10, 20, 30), an object-related communication between various communication devices (10, 20, 30), in which the communication devices (10, 20, 30) address only the digital representation, such that the communication devices (10, 20, 30), and thus their users, remain anonymous,
communicating an overview of all information packets, present in the information container (101a, 102a, 103a), to a communication device (10, 20, 30) when the communication device directly or indirectly reads the information carrier (I) of the everyday item (101, 102, 103) and accesses the digital representation (101', 102', 103'), the overview of the information packets being displayed by a display device of the communication device (10, 20, 30), and certain information packets that are to be retrieved from the loT platform (6) by the communication device (10, 20, 30) being selectable by means of an input into the communication device (10, 20, 30).

2. The method according to claim 1, the method further including:
- providing a communication channel between a communication device (10, 20, 30) and the IoT platform (6) when the communication device (10, 20, 30) directly or indirectly reads the information carrier (I) of the physical object (101, 102, 103), the communication device (10, 20, 30) preferably having an internet connection via which it accesses the particular digital representation (101', 102', 103').

3. The method according to claim 2, wherein when the communication channel is provided, the loT platform (6) sends information packets via the communication channel and receives requests and/or information via the communication channel.

4. The method according to claim 2 or 3, wherein multiple communication channels for various communication devices (10, 20, 30) are provided when the various communication devices (10, 20, 30) directly or indirectly read the information carrier (I) of the physical object (101, 102, 103).

5. The method according to one of the preceding claims, wherein it is possible for the information container (101a, 102a, 103a) to futher include at least one static information packet and/or at least one dynamic information packet and/or at least one access-sensitive information packet,
each static information packet being processable solely by communication devices (10, 20, 30) of information issuers (4),
each dynamic information packet being processable by communication devices (10, 20, 30) that are not solely information issuers (4),
each access-sensitive information packet being automatically supplemented based on an access by a communication device (10, 20, 30).

6. The method according to one of the preceding claims, wherein the information container (101a, 102a, 103a) includes at least one access-sensitive information packet, wherein with each access by a communication device (10, 20, 30) the access-sensitive information packet is supplemented with additional information about the access that takes place, the supplementation preferably including the time of the access and/or the type of communication device (10, 20, 30) that has accessed the information packet.

7. The method according to one of the preceding claims, the method further including:
- configuring the information container (101a, 102a, 103a) of the digital representation (101', 102', 103'), the configuring of the information container (101a, 102a, 103a) preferably being carried out by a communication device (10, 20, 30) of an information issuer (4) who preferably is neither the owner nor the issuer of the physical object (101, 102, 103), including
i) adding at least one information packet to the information container (101a, 102a, 103a) of the digital representation (101', 102', 103'), and/or
ii) removing at least one information packet from the information container (101a, 102a, 103a) of the digital representation (101', 102', 103').

8. The method according to one of the preceding claims, further including:
- providing an information packet pool (7) that includes available information packets, it being possible for information packets of the information packet pool (7) that are newly available to be created by an information issuer (4), who preferably is neither the owner nor the issuer of the physical object (101, 102, 103).

9. The method according to one of the preceding claims, wherein the configuring of the information container (101a, 102a, 103a) of the digital representations (101', 102', 103') takes place at least semiautomatically, in that the information packets that are available for the digital representation (101', 102', 103') are preferably automatically preselected, based on a certain feature of the digital representation (101', 102', 103'), via machine learning.

10. The method according to one of the preceding claims, wherein for creating the digital representation (101', 102', 103'), an initially unassigned digital representation (101', 102', 103') is created regardless of the existence of the physical object (101, 102, 103), it being possible to subsequently link to the physical object (101, 102, 103) by means of the identifier (UID).

11. The method according to one of the preceding claims, further including:
- issuing the physical object (101, 102, 103) with the information carrier (I), wherein the manufacture of the physical object (101, 102, 103), the manufacture of the information carrier (I), and the addition of the information carrier (I) to the physical object (101, 102, 103) take place independently of one another, and are preferably carried out by at least two different actors.

12. The method according to one of the preceding claims, further including:
- enabling the digital representation (101', 102', 103') for configuring the information container (101a, 102a, 103a), the enabling being a mandatory prerequisite for configuring the information container of the digital representation (101', 102', 103'), and the enabling preferably including:
a) granting permission for the configuring, preferably to certain actors, and/or
b) establishing rules for the configuring, wherein the rules may include one or more of the following rule types:
b1) the particular information container (101a, 102a, 103a) may contain only static information packets;
b2) the particular information container (101a, 102a, 103a) may contain only dynamic information packets;
b3) the particular information container (101a, 102a, 103a) may contain only access-sensitive information packets;
b4) the particular information container (101a, 102a, 103a) may contain only gateway information packets;
b5) the particular information container (101a, 102a, 103a) must contain at least one static information packet and at least one dynamic information packet;
b6) the particular information container (101a, 102a, 103a) must contain at least one static information packet and at least one access-sensitive information packet;
b7) the particular information container (101a, 102a, 103a) must contain at least one static information packet and a gateway information packet;
b8) the particular information container (101a, 102a, 103a) must contain at least one dynamic information packet and at least one access-sensitive information packet;
b9) the particular information container (101a, 102a, 103a) must contain at least one dynamic information packet and a gateway information packet;
b10) the particular information container (101a, 102a, 103a) must contain at least one access-sensitive information packet and a gateway information packet;
b11) the particular information container (101a, 102a, 103a) must contain at least one static information packet and at least one dynamic information packet and at least one access-sensitive information packet;
b12) the particular information container (101a, 102a, 103a) must contain at least one static information packet and at least one dynamic information packet and a gateway information packet;
b13) the particular information container (101a, 102a, 103a) must contain at least one static information packet and at least one access-sensitive information packet and a gateway information packet;
b14) the particular information container (101a, 102a, 103a) must contain at least one dynamic information packet and at least one access-sensitive information packet and a gateway information packet;
b15) the particular information container (101a, 102a, 103a) may contain only certain information packets from an information packet pool (7);
b16) there is a maximum limit for the number of information packets in the particular information container (101a, 102a, 103a);
b17) there is a minimum limit for the number of information packets in the particular information container (101a, 102a, 103a);
b18) the addition or the removal of information packets may take place only within certain time periods and/or at certain times of day;
b19) the addition or the removal of information packets can take place only when a certain further condition besides the enabling of the digital representation (101', 102', 103') is met.

13. An IoT platform (6), which is configured to carry out the particular steps of the method according to one of claims 1 through 12.

14. A computer program that includes commands which, when the program is executed by a computer, cause the computer to carry out the method according to one of claims 1 through 12.

## Revendications

1. Procédé permettant entre des utilisateurs une communication anonyme liée à un objet, qui est réalisée en se rapportant à un objet physique (101, 102, 103), comportant les étapes suivantes :
la création d'une représentation numérique (101', 102', 103`) d'un objet physique (101, 102, 103) sur une plateforme IoT (6), dans lequel l'objet physique est un élément du quotidien, par exemple une tasse à café ou un verre à bière,
dans lequel l'élément du quotidien (101, 102, 103) comporte au moins un support d'informations (I), le support d'informations (I) comprenant au moins un identifiant (UID), l'élément du quotidien (101, 102, 103) étant assignable sans équivoque à sa représentation numérique (101', 102', 103'), sur la base de l'identifiant (UID), et
dans lequel le support d'informations (I) est lisible au moyen d'un dispositif de communication (10, 20, 30) d'un propriétaire ou d'un utilisateur de l'élément du quotidien, afin de convertir l'identifiant (UID) en un identifiant permanent (PID) conçu en tant que lien Internet, afin d'accéder à la représentation numérique respective (101', 102', 103`) sur la plateforme IoT (6) par l'Internet,
la fourniture d'un conteneur d'informations configurable (101a, 102a, 103a) pour la représentation numérique (101', 102', 103`) sur la plateforme IoT (6),
dans lequel le conteneur d'informations (101a, 102a, 103a) comprend un paquet d'informations de passerelle, le paquet d'informations de passerelle permettant une communication entre des dispositifs de communication (10, 20, 30),
dans lequel le conteneur d'informations (101a, 102a, 103a) fait office de cache pour des informations communiquées depuis les dispositifs de communication (10, 20, 30) vers la représentation numérique (101', 102', 103`) pour permettre, en relayant ces informations à d'autres dispositifs de communication (10, 20, 30), une communication liée à un objet entre divers dispositifs de communication (10, 20, 30), dans lequel les dispositifs de communication ne s'adressent qu'à la représentation numérique, de telle sorte que les dispositifs de communication, et donc leurs utilisateurs, restent anonymes,
la communication d'une vue d'ensemble de tous les paquets d'informations présents dans le conteneur d'informations (101a, 102a, 103a) à un dispositif de communication (10, 20, 30) quand le dispositif de communication lit directement ou indirectement le support d'informations (I) de l'élément du quotidien (101, 102, 103) et accède à la représentation numérique (101', 102', 103'), une vue d'ensemble des paquets d'informations étant affichée par un dispositif d'affichage du dispositif de communication (10, 20, 30) et certains paquets d'informations qui doivent être récupérés à partir de la plateforme IoT (6) par le dispositif de communication (10, 20, 30) pouvant être sélectionnés au moyen d'une entrée dans le dispositif de communication (10, 20, 30).

2. Procédé selon la revendication 1, le procédé comprenant en outre :
- la fourniture d'un canal de communication entre un dispositif de communication (10, 20, 30) et la plateforme IoT (6) quand le dispositif de communication (10, 20, 30) lit directement ou indirectement le support d'informations (I) de l'objet physique (101, 102, 103), le dispositif de communication (10, 20, 30) disposant de préférence d'une connexion internet par laquelle il accède à la représentation numérique respective (101', 102', 103').

3. Procédé selon la revendication 2, dans lequel, quand le canal de communication est fourni, la plateforme IoT (6) envoie des paquets d'informations par le canal de communication et reçoit des demandes et/ou des informations par le canal de communication.

4. Procédé selon la revendication 2 ou 3, dans lequel plusieurs canaux de communication pour différents dispositifs de communication (10, 20, 30) sont fournis lorsque les différents dispositifs de communication (10, 20, 30) lisent directement ou indirectement le support d'informations (I) de l'objet physique (101, 102, 103).

5. Procédé selon l'une des revendications précédentes, dans lequel il est possible que le conteneur d'informations (101a, 102a, 103a) comprenne en outre au moins un paquet d'informations statiques et/ou au moins un paquet d'informations dynamiques et/ou au moins un paquet d'informations sensibles à l'accès,
chaque paquet d'informations statiques pouvant être traité uniquement par des dispositifs de communication (10, 20, 30) d'émetteurs d'informations (4),
chaque paquet d'informations dynamiques pouvant être traité par des dispositifs de communication (10, 20, 30) qui ne sont pas uniquement émetteurs d'informations (4),
chaque paquet d'informations sensibles à l'accès étant automatiquement complété en fonction d'un accès par un dispositif de communication (10, 20, 30).

6. Procédé selon l'une des revendications précédentes, dans lequel le conteneur d'informations (101a, 102a, 103a) comprend au moins un paquet d'informations sensibles à l'accès, dans lequel à chaque accès par un dispositif de communication (10, 20, 30) le paquet d'informations sensibles à l'accès est complété par une information supplémentaire sur l'accès qui a eu lieu, le complément comportant de préférence l'heure de l'accès et/ou le type de dispositif de communication (10, 20, 30) qui a accédé au paquet d'informations.

7. Procédé selon l'une des revendications précédentes, le procédé comprenant en outre :
- la configuration du conteneur d'informations (101a, 102a, 103a) de la représentation numérique (101', 102', 103'), la configuration du conteneur d'informations (101a, 102a, 103a) étant de préférence réalisée par un dispositif de communication (10, 20, 30) d'un émetteur d'informations (4) qui n'est de préférence ni le propriétaire, ni l'émetteur de l'objet physique (101, 102, 103), comportant :
i) l'ajout d'au moins un paquet d'informations au conteneur d'informations (101a, 102a, 103a) de la représentation numérique (101 `, 102', 103'), et/ou
ii) le retrait d'au moins un paquet d'informations du conteneur d'informations (101a, 102a, 103a) de la représentation numérique (101 `, 102', 103').

8. Procédé selon l'une des revendications précédentes, comprenant en outre :
- la fourniture d'un ensemble de paquets d'informations (7) comprenant des paquets d'informations disponibles, des nouveaux paquets d'informations de l'ensemble de paquets d'informations (7) disponibles pouvant être créés par un émetteur d'informations (4), qui n'est de préférence ni le propriétaire, ni l'émetteur de l'objet physique (101, 102, 103).

9. Procédé selon l'une des revendications précédentes, dans lequel la configuration du conteneur d'informations (101a, 102a, 103a) des représentations numériques (101', 102', 103`) se déroule au moins semi-automatiquement, en ce que les paquets d'informations disponibles pour la représentation numérique (101', 102', 103`) sont de préférence présélectionnés automatiquement, en fonction d'une certaine caractéristique de la représentation numérique (101', 102`, 103'), par apprentissage automatique.

10. Procédé selon l'une des revendications précédentes, dans lequel, pour la création de la représentation numérique (101', 102', 103'), une représentation numérique initialement non attribuée (101 `, 102', 103`) est créée, indépendamment de l'existence de l'objet physique (101, 102, 103), un lien à l'objet physique (101, 102, 103) pouvant être établi ultérieurement au moyen de l'identifiant (UID).

11. Procédé selon l'une des revendications précédentes, comprenant en outre :
- la délivrance de l'objet physique (101, 102, 103) avec le support d'informations (I), dans laquelle la fabrication de l'objet physique (101, 102, 103), la fabrication du support d'informations (I) et l'ajout du support d'informations (I) à l'objet physique (101, 102, 103) ont lieu indépendamment les uns des autres, et sont de préférence effectués par au moins deux acteurs différents.

12. Procédé selon l'une des revendications précédentes, comprenant en outre :
- l'activation de la représentation numérique (101', 102', 103`) pour configurer le conteneur d'informations (101a, 102a, 103a), l'activation étant une condition préalable obligatoire à la configuration du conteneur d'informations (101a, 102a, 103a) de la représentation numérique (101', 102', 103'), et l'activation comprenant de préférence :
a) l'accord d'une autorisation de la configuration, de préférence à certains acteurs, et/ou
b) l'établissement de règles de la configuration, les règles pouvant inclure un ou plusieurs des types de règles suivants :
b1) le conteneur d'informations respectif (101a, 102a, 103a) ne peut contenir que des paquets d'informations statiques ;
b2) le conteneur d'informations respectif (101a, 102a, 103a) ne peut contenir que des paquets d'informations dynamiques ;
b3) le conteneur d'informations respectif (101a, 102a, 103a) ne peut contenir que des paquets d'informations sensibles à l'accès ;
b4) le conteneur d'informations respectif (101a, 102a, 103a) ne peut contenir que des paquets d'informations de passerelle ;
b5) le conteneur d'informations respectif (101a, 102a, 103a) doit contenir au moins un paquet d'informations statiques et au moins un paquet d'informations dynamiques ;
b6) le conteneur d'informations respectif (101a, 102a, 103a) doit contenir au moins un paquet d'informations statiques et au moins un paquet d'informations sensibles à l'accès ;
b7) le conteneur d'informations respectif (101a, 102a, 103a) doit contenir au moins un paquet d'informations statiques et un paquet d'informations de passerelle ;
b8) le conteneur d'informations respectif (101a, 102a, 103a) doit contenir au moins un paquet d'informations dynamiques et au moins un paquet d'informations sensibles à l'accès ;
b9) le conteneur d'informations respectif (101a, 102a, 103a) doit contenir au moins un paquet d'informations dynamiques et un paquet d'informations de passerelle ;
b10) le conteneur d'informations respectif (101a, 102a, 103a) doit contenir au moins un paquet d'informations sensibles à l'accès et un paquet d'informations de passerelle ;
b11) le conteneur d'informations respectif (101a, 102a, 103a) doit contenir au moins un paquet d'informations statiques et au moins un paquet d'informations dynamiques et au moins un paquet d'informations sensibles à l'accès ;
b12) le conteneur d'informations respectif (101a, 102a, 103a) doit contenir au moins un paquet d'informations statiques et au moins un paquet d'informations dynamiques et un paquet d'informations de passerelle ;
b13) le conteneur d'informations respectif (101a, 102a, 103a) doit contenir au moins un paquet d'informations statiques et au moins un paquet d'informations sensibles à l'accès et un paquet d'informations de passerelle ;
b14) le conteneur d'informations respectif (101a, 102a, 103a) doit contenir au moins un paquet d'informations dynamiques et au moins un paquet d'informations sensibles à l'accès et un paquet d'informations de passerelle ;
b15) le conteneur d'informations respectif (101a, 102a, 103a) ne peut contenir que certains paquets d'informations provenant d'un ensemble de paquets d'informations (7) ;
b16) il existe une limite maximale pour le nombre de paquets d'informations dans le conteneur d'informations respectif (101a, 102a, 103a) ;
b17) il existe une limite minimale pour le nombre de paquets d'informations dans le conteneur d'informations respectif (101a, 102a, 103a) ;
b18) l'ajout ou le retrait de paquets d'informations ne peut avoir lieu que dans certains délais et/ou à certaines heures de la journée ;
b19) l'ajout ou le retrait de paquets d'informations ne peut avoir lieu que lorsqu'une certaine condition supplémentaire en plus de l'activation de la représentation numérique (101 `, 102', 103`) est remplie.

13. Plateforme IoT (6), configurée pour réaliser les étapes respectives du procédé selon l'une des revendications 1 à 12.

14. Programme d'ordinateur comprenant des commandes qui, à l'exécution du programme par un ordinateur, amènent l'ordinateur à effectuer le procédé selon l'une des revendications 1 à 12.
